(19) Europäisches Patentamt
European Patent Office
Office européen des brevets

(11) EP 3 689 983 A1

(12) **EUROPEAN PATENT APPLICATION**
published in accordance with Art. 153(4) EPC

(43) Date of publication:
**05.08.2020 Bulletin 2020/32**

(21) Application number: **18862096.7**

(22) Date of filing: **30.08.2018**

(51) Int Cl.:
***C09D 11/38*** *(2014.01)* ***B41J 2/01*** *(2006.01)*
***B41M 5/00*** *(2006.01)*

(86) International application number:
**PCT/JP2018/032266**

(87) International publication number:
**WO 2019/065071 (04.04.2019 Gazette 2019/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.09.2017 JP 2017189172**

(71) Applicant: **Fujifilm Corporation**
**Minato-ku**
**Tokyo 106-8620 (JP)**

(72) Inventor: **HONGO, Yushi**
**Kanagawa 258-8577 (JP)**

(74) Representative: **Klunker IP**
**Patentanwälte PartG mbB**
**Destouchesstraße 68**
**80796 München (DE)**

(54) **INK COMPOSITION FOR INKJET RECORDING AND INKJET RECORDING METHOD**

(57) Provided are an ink jet recording ink composition including: a coloring material; water; an organic solvent represented by the following General Formula (1) or the following General Formula (2) and having a ClogP value of 0.5 to 2.7; and a surfactant having a fluorine atom in a molecule, in which a content of the organic solvent is 1.0 mass% or more and less than 5.0 mass% with respect to a total mass of a composition, a content of the surfactant is 0.001 mass% or more and less than 0.1 mass% with respect to the total mass of a composition, surface tension is 25 mN/m or higher and 35 mN/m or lower, and interfacial tension with a substrate in a case of coming into contact with the substrate having surface energy of 68 mN/m is 25 mN/m or higher and lower than 60 mN/m, and an ink jet recording method ($R^1$: hydrogen or methyl; $R^2$: hydrocarbon having 4 to 9 carbon atoms; n = 1 to 3; $R^3$: hydrocarbon having 4 to 9 carbon atoms).

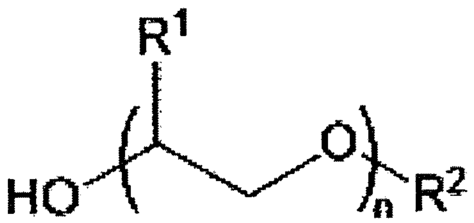

General Formula (1)

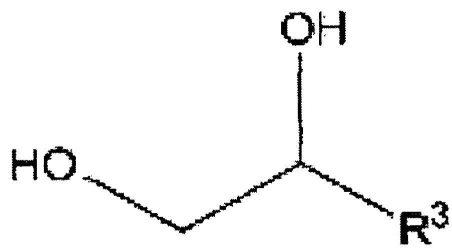

General Formula (2)

EP 3 689 983 A1

## Description

BACKGROUND OF THE INVENTION

1. Field of the Invention

The present disclosure relates to an ink jet recording ink composition and an ink jet recording method.

2. Description of the Related Art

In an image recording method using an ink jet method (ink jet recording method), a printing plate is not required, and since an image is directly recorded on a recording substrate by jetting ink to only an image recording portion, ink can be used efficiently. Thus, running cost is low. Furthermore, a printing apparatus used in the ink jet recording method also can be manufactured at relatively lower cost than a conventional printing machine and downsized with less noise. The ink jet recording method has various advantages compared to other image recording methods.

In the related art, in order to improve image quality of recorded matter in a system without treatment liquid, it is effective that by reducing surface tension of ink to improve wettability to a substrate, ink is prevented from being coalescence each other when ink lands. However, in a case where the surface tension of ink is reduced, satellite droplets caused by separated part of ink that adheres to a position away from a desired position and mist droplets that move like a mist are easily generated when ink is jetted. Thus, attempts have been made to improve jetting reliability.

It is disclosed in JP2016-010931A that an aqueous ink contains: a dispersed dye; a resin; an organic solvent; and water, in which an average SP value of the organic solvent is 16 or more and less than 22.

In addition, it is disclosed in JP2016-204524A that a dispersion includes: an aggregating agent for a colorant; a water-soluble organic solvent; a polymer particle; and water, in which the polymer particle has a core-shell structure with a core portion including a wax, and a shell portion of the polymer particle has a lower critical dissolution temperature of 30°C or higher.

Furthermore, it is disclosed in JP2017-109485A that a first and a second ink composition each include water, a water-soluble organic solvent, and a solid content including at least a coloring material. In addition, it is disclosed that in a case where after drying the first ink composition, the second ink is jetted, a ratio of the water-soluble organic solvent to the solid content in first ink is denoted by $\gamma 1$, and a ratio of the water-soluble organic solvent to the solid content in second ink is denoted by $\gamma 2$, a ratio of $\gamma 1$ to $\gamma 2$ is optimized, and thereby, ink for an ink jet in which bleeding and cracking are suppressed is obtained.

SUMMARY OF THE INVENTION

In a case of the ink or the dispersion described in JP2016-010931A, JP2016-204524A, and JP2017-109485A, from the viewpoint of improving jetting reliability and image granularity (hereinafter, sometimes referred to as image quality), the surface tension of the composition is adjusted within a preferable range. However, in any case, the recorded image quality is poor, and the granularity and the jetting reliability are not achieved at the same time.

The present disclosure has been made in view of the above problems. That is, an object to be solved by an embodiment of the present disclosure is to provide an ink jet recording ink composition (hereinafter, sometimes simply referred to as ink) having excellent jetting reliability and granularity of a recorded image, and an ink jet recording method of recording an image having excellent jetting reliability and good granularity.

As a result of intensive studies by the present inventors on the above-described problems in the related art, the following knowledge was obtained. That is, wettability to a substrate can be improved while maintaining surface tension of ink to be high by specifying an organic solvent and a surfactant to be added to an ink composition and adjusting surface tension of ink composition and interfacial tension between the ink composition and the target substrate within a specific range. As a result, both good image quality and high jetting reliability can be achieved.

Specific means for achieving the above object includes the following aspects.

<1> An ink jet recording ink composition comprising: a coloring material; water; an organic solvent represented by the following General Formula (1) or the following General Formula (2) and having a ClogP value of 0.5 to 2.7; and a surfactant having a fluorine atom in a molecule, in which a content of the organic solvent is 1.0 mass% or more and less than 5.0 mass% with respect to a total mass of a composition, a content of the surfactant is 0.001 mass % or more and less than 0.1 mass% with respect to the total mass of a composition, surface tension is 25 mN/m or higher and lower than 35 mN/m, and interfacial tension with a substrate in a case of coming into contact with the substrate having surface energy of 68 mN/m is 25 mN/m or higher and lower than 60 mN/m.

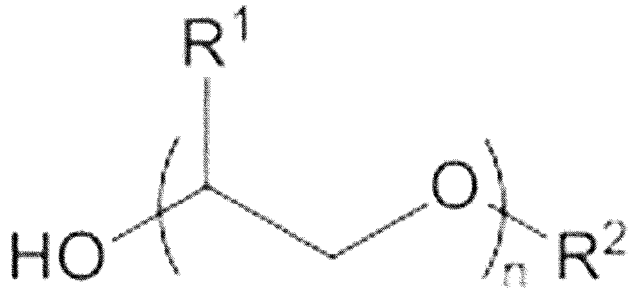

General Formula (1)

In General Formula (1), $R^1$'s each independently represent a hydrogen atom or a methyl group, $R^2$ represents a linear or branched hydrocarbon group having 4 to 9 carbon atoms or an aryl group having 6 to 10 carbon atoms, and n represents an integer of 1 to 3.

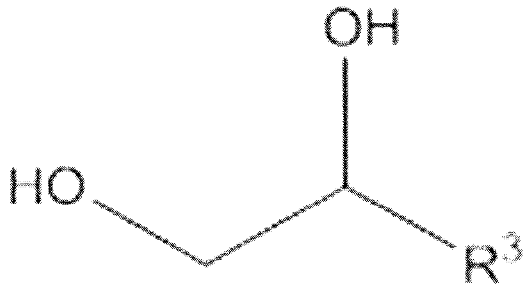

General Formula (2)

In General Formula (2), $R^3$ represents a linear or branched hydrocarbon group having 4 to 9 carbon atoms or an aryl group having 6 to 10 carbon atoms.

<2> The ink jet recording ink composition according to <1>, in which the interfacial tension is 40 mN/m or higher and lower than 60 mN/m.

<3> The ink jet recording ink composition according to <1> or <2>, in which the organic solvent is a compound represented by General Formula (1).

<4> The ink jet recording ink composition according to any one of <1> to <3>, in which in General Formula (1), $R^2$ is a linear hydrocarbon group having 4 to 9 carbon atoms.

<5> The ink jet recording ink composition according to any one of <1> to <4>, in which the ClogP value of the organic solvent is 1.5 to 2.0.

<6> The ink jet recording ink composition according to any one of <1> to <5>, in which the organic solvent is diethylene glycol monohexyl ether or ethylene glycol monohexyl ether.

<7> The ink jet recording ink composition according to any one of <1> to <6>, in which the surfactant has a perfluoroalkyl group in the molecule.

<8> The ink jet recording ink composition according to any one of <1> to <7>, in which the surfactant is an anionic surfactant.

<9> The ink jet recording ink composition according to any one of <1> to <8>, in which the surface tension is 28 mN/m to 33 mN/m.

<10> An ink jet recording method of recording an image by jetting the ink jet recording ink composition according to any one of <1> to <9> on a substrate.

<11> The ink jet recording method according to <10>, in which the substrate is a low water-absorptive or non-water-absorptive substrate.

According to one embodiment of the present disclosure, the ink jet recording ink composition having excellent jetting reliability and granularity of a recorded image and the ink jet recording method of recording an image having excellent granularity and having excellent jetting reliability can be provided.

DESCRIPTION OF THE PREFERRED EMBODIMENTS

According to the present specification, the numerical range expressed by using "to" means a range including numerical values described before and after "to" as a minimum value and a maximum value. In the numerical range subsequently described in the present disclosure, an upper limit value or a lower limit value described in a certain

numerical range may be replaced with an upper limit value or a lower limit value in another numerical range. Furthermore, in the numerical range described in the present disclosure, an upper limit value or a lower limit value described in a certain numerical range may be replaced with values shown in Examples.

In the present specification, "(meth)acryl" represents either or both of acryl and methacryl, "(meth)acrylate" represents either or both of acrylate and methacrylate, and "(meth)acrylamide" represents either or both of acrylamide and methacrylamide.

In the present specification, "mass%" and "weight%" have the same definition, and "part by mass" and "part by weight" have the same definition. In the present specification, a combination of two or more preferred aspects is a more preferable aspect.

In the present specification, in the case where the substitution or non-substitution is not described with respect to the notation of the group in the compound represented by the formula, in a case where the above group can further have a substituent, unless otherwise specified, not only an unsubstituted group but also a group having a substituent are included. For example, in the formula, in a case where there is a description "R represents an alkyl group, an aryl group or a heterocyclic group", the description means "R represents an unsubstituted alkyl group, a substituted alkyl group, an unsubstituted aryl group, a substituted aryl group, an unsubstituted heterocyclic group, or a substituted heterocyclic group".

In the present specification, the expression "step" includes not only an independent step but also includes any step as long as the intended purpose of the step is achieved even in a case where the step is not clearly distinguished from other steps.

In the specification, "jetting reliability" refers to the fact that there are few satellite droplets caused by separated part of ink that adheres to a position away from a desired position and mist droplets that move like a mist when ink jetting, and means a performance that ink droplets are jetted on the desired position.

"Granularity" refers to a property in which granular color unevenness appears in a recorded image.

In the specification, in a case where a plurality of materials corresponding to each component exist in a composition, an amount of each component in the composition means a total amount of the plurality of materials existing in the composition, unless otherwise particularly specified.

<<Ink>>

Ink of the present disclosure includes: a coloring material; water; an organic solvent represented by the following General Formula (1) or the following General Formula (2) and having a ClogP value of 0.5 to 2.7; and a surfactant having a fluorine atom in a molecule, in which a content of the organic solvent is 1.0 mass% or more and less than 5.0 mass% with respect to a total mass of a composition, a content of the surfactant is 0.001 mass% or more and less than 0.1 mass% with respect to the total mass of a composition, surface tension is 25 mN/m or higher and lower than 35 mN/m, and interfacial tension with a substrate in a case of coming into contact with the substrate having surface energy of 68 mN/m is 25 mN/m or higher and lower than 60 mN/m.

The ClogP value indicates that the higher the numerical value, the higher the hydrophobicity.

In the related art, the technique in which surface tension of ink is lowered and wettability is improved in order to realize excellent image quality as disclosed in JP2016-010931A, JP2016-204524A, and JP2017-109485A has been known. However, in a case where the surface tension is lowered, since the jetting reliability of ink from nozzles is impaired, it is difficult to achieve both excellent image quality and jetting reliability. Therefore, the present inventors focused on the surface tension of ink, the interfacial tension between ink and a substrate, and the organic solvent and the surfactant which are contained in ink, in order to improve ink wettability to the substrate without impairing jetting reliability.

In general, the following Expression 1 (extension of Fowkes equation) is established between surface energy of the substrate and surface energy of liquid. In addition, in general, the following Expression 1 to the following Expression 3 (extension of Fowkes equation) is established between surface energy of the substrate and surface energy of liquid. Furthermore, the following Expression 4 is established between the interfacial tension between the substrate and the liquid and the surface energy of the liquid and the substrate.

$$\gamma_L(1+\cos\theta) = 2(\gamma_s^d\gamma_L^d)^{1/2} + 2(\gamma_s^p\gamma_L^p)^{1/2} + 2(\gamma_s^h\gamma_L^h)^{1/2} \quad \text{... Expression 1}$$

$$\gamma_s = \gamma_s^d + \gamma_s^p + \gamma_s^h \quad \text{... Expression 2}$$

$$\gamma_L = \gamma_L^d + \gamma_L^p + \gamma_L^h \quad \text{... Expression 3}$$

$$\gamma_{sL} = \gamma_s + \gamma_L - 2(\gamma_s^d\gamma_L^d)^{1/2} - 2(\gamma_s^p\gamma_L^p)^{1/2} - 2(\gamma_s^h\gamma_L^h)^{1/2} \quad \text{... Expression 4}$$

$\gamma_s$: Surface energy of substrate
$\gamma_s^d$: Surface energy of substrate (dispersion component)
$\gamma_s^p$: Surface energy of substrate (polar component)
$\gamma_s^h$: Surface energy of substrate (hydrogen bond component)
$\gamma_L$: Surface energy of substrate
$\gamma_L^d$: Surface energy of substrate (dispersion component)
$\gamma_L^p$: Surface energy of substrate (polar component)
$\gamma_L^h$: Surface energy of substrate (hydrogen bond component)
$\gamma_{sL}$: Interfacial tension between ink and substrate
$\theta$: Contact angle

From Expressions 1 and 4, $\gamma_{sL}$ (interfacial tension) is represented by $\gamma_s$ - $\gamma_L\cos\theta$ (Expression 5). Therefore, in general, in a case where the surface tension of ink is lowered, the interfacial tension between the ink and the substrate is increased. However, even though the surface tension is lowered to such an extent that the jetting reliability of ink is not impaired, it is difficult to increase the interfacial tension to such an extent that excellent wettability can be realized. Therefore, the present inventors studied to reduce a value of $\cos\theta$ in the above Expression 5 as means for maintaining the surface tension to such an extent that the jetting reliability of ink is not impaired and improving the interfacial tension.

From the above Expression 1, elements varying the value of $\cos\theta$ include the surface energy of a dispersion component ($\gamma_s^d$, $\gamma_L^d$), a polar component ($\gamma_s^p$, $\gamma_L^p$), and a hydrogen bond component ($\gamma_s^h$, $\gamma_L^h$) in the substrate and the ink. That is, from Expressions 1 and 4, the smaller the surface energy of the dispersion component, the polar component, and the hydrogen bond component in the ink and the substrate, the greater the interfacial tension. Therefore, by combining an organic solvent having a specific structure and a specific surfactant (fluorine-based), it is possible that while maintaining the surface tension of ink to be high, the surface energy of the polar component, the dispersion component, and the hydrogen bond component is reduced, and the interfacial tension between the ink and the substrate is increased.

In one embodiment of the present invention, from the viewpoint of dispersibility, polarity, and hydrogen bondability, the organic solvent contained in the ink has a specific molecular structure in which the surface energy of the organic solvent is small, so that the interfacial tension between the ink and the substrate is significantly improved. Furthermore, by including a specific surfactant, the surface tension is maintained using a small amount of the surfactant to be high to such an extent that jetting reliability of ink is not impaired.

As a result, in one embodiment of the present disclosure, jetting reliability can be ensured due to the high surface tension of the ink, and the ink wettability with respect to the substrate is improved due to the high interfacial tension between the ink and the substrate, and thereby excellent image quality having good granularity can be realized.

<Surface tension of ink>

In the present disclosure, the surface tension of ink is 25 mN/m or higher and lower than 35 mN/m. In a case where the surface tension of ink is 25 mN/m or higher, the jetting reliability of ink is excellent. Furthermore, in a case where the surface tension of ink is lower than 35 mN/m, the wettability of ink to the substrate becomes good and the image quality is improved. From the viewpoint of the jetting reliability and the image quality having good granularity, the ink surface tension is more preferably 28 mN/m or higher and 33 mN/m or lower.

The surface tension of ink is a value measured at a temperature of 25°C by using Automatic Surface Tensiometer CBVP-Z (manufactured by Kyowa Interface Science Co., Ltd.).

<Interfacial tension between ink and substrate>

Ink of the present disclosure has an interfacial tension of 25 mN/m or higher and lower than 60 mN/m in a case where the ink comes into contact with a substrate having a surface energy of 68 mN/m. Therefore, the wettability of ink to the substrate is improved, and an image having excellent granularity can be recorded.

The interfacial tension is measured as follows. That is, a contact angle of a target ink is measured at 20°C by using a contact angle meter (DMs-401 manufactured by Kyowa Interface Science Co., Ltd.) with respect to three or more kinds of substrates whose surface energy is already known by calculating with a method of measuring surface energy ($\gamma_s$) of the substrate. The dispersion component ($\gamma_L^d$), the polar component ($\gamma_L^p$), and the hydrogen bond component ($\gamma_L^h$) of the surface energy of ink are respectively obtained by substituting the measured value into the above Expression 1. Then, the surface energy ($\gamma_L$) of the substrate is calculated by Expression 3.

These values are substituted into Expression 4, and then the interfacial tension ($\gamma_{sL}$) between the substrate and the composition is calculated.

In a case where the interfacial tension is lower than 60 mN/m, the wettability is not too high, and thus the image quality becomes good. On the other hand, in a case where the interfacial tension is 25 mN/m or higher, the wettability of ink to the substrate is sufficient, an image having good granularity can be realized, and preservation stability of ink is high. From the viewpoint of obtaining an excellent image having good granularity, the interfacial tension is preferably 40 mN/m or higher and lower than 60 mN/m.

Next, each component contained in the ink of the present disclosure will be described.

<Organic solvent>

The ink of the present disclosure contains an organic solvent represented by the following General Formula (1) or General Formula (2) and having a ClogP value of 0.5 to 2.7. Thereby, the jetting reliability and the wettability to the substrate can be improved by controlling hydrophobicity of ink.

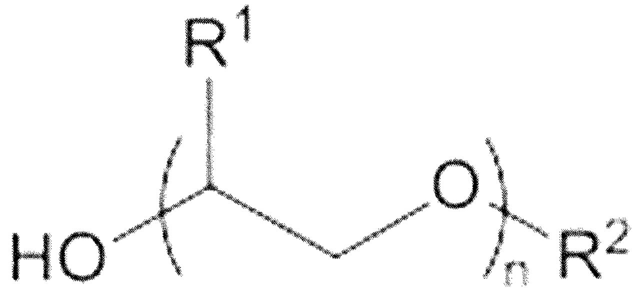

General Formula (1)

In General Formula (1), $R^1$'s each independently represent a hydrogen atom or a methyl group, $R^2$ represents a linear or branched hydrocarbon group having 4 to 9 carbon atoms or an aryl group having 6 to 10 carbon atoms, and n represents an integer of 1 to 3.

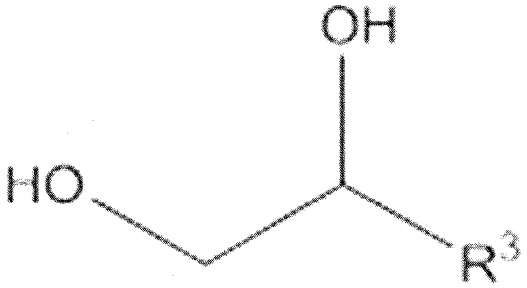

General Formula (2)

In General Formula (2), $R^3$ represents a linear or branched hydrocarbon group having 4 to 9 carbon atoms or an aryl group having 6 to 10 carbon atoms.

From the viewpoint of reducing the surface tension of ink, in General Formula (1), $R^1$ is preferably a hydrogen atom.

From the viewpoint of causing the ClogP value to be 0.5 to 2.7, in General Formula (1), $R^2$ is preferably a linear or branched hydrocarbon group having 6 to 8 carbon atoms. In addition, the hydrocarbon group in $R^2$ is preferably linear.

In General Formula (1), the aryl group in $R^2$ is preferably a phenyl group or a naphthyl group and more preferably a phenyl group.

From the viewpoint of reducing the surface tension of ink, in General Formula (1), n is preferably 1 or 2 and more preferably 1.

From the viewpoint of causing the ClogP value to be 0.5 to 2.7, in General Formula (2), $R^3$ is preferably a linear or branched hydrocarbon group having 6 to 8 carbon atoms.

In General Formula (2), the aryl group in $R^3$ is preferably a phenyl group or a naphthyl group and more preferably a phenyl group.

From the viewpoint of image quality having good granularity, the organic solvent is preferably a compound which is represented by General Formula (1) and particularly preferably a compound which is represented by General Formula (1) and in which $R^2$ is preferably a linear hydrocarbon group having 4 to 9 carbon atoms.

From the viewpoint of preservation stability of ink, the organic solvent is preferably a compound represented by General Formula (2).

The organic solvent represented by General Formula (1) or General Formula (2) has a molecular structure specified in terms of dispersibility, polarity and hydrogen bondability and having small surface energy. Therefore, the interfacial tension between the ink of the present disclosure and the substrate can be significantly improved.

(ClogP value)

The ClogP value in the present disclosure is a value indicating a level of hydrophobicity, and the higher the numerical value, the higher the hydrophobicity.

A method of obtaining the ClogP value is extremely common. In addition, the ClogP value is uniquely determined from the structural formula, and the ClogP value is also changed in a case of changing the structural formula. For example, the ClogP value can be uniquely calculated from the structural formula using ChemDraw Ultra13.0.

Furthermore, a ClogP value of a mixture is an average value based on mass according to a blending ratio of each component. For example, in a case where a composition C in which compounds A and B are mixed to each other contains the compound A of 90 mass% and the compound B of 10 mass%, the compound A has a ClogP value of 2.77, and the compound B has a ClogP value of 4.66, a ClogP value of the composition C is the average value based on mass that is calculated from the ClogP value and the blending ratio of each compound, and the value is 2.96.

In the present disclosure, the ClogP value of the organic solvent is calculated by using ChemBioDraw Ultra 13.0.

The ClogP value of the organic solvent is 0.5 to 2.7. In a case where the ClogP value of the organic solvent is 0.5 or more, the organic solvent has sufficient hydrophobicity, the wettability to the substrate is improved, and image quality is good. In a case where the ClogP value of the organic solvent is 2.7 or less, the hydrophobicity is not too high, and preservation stability and jetting reliability of ink become good. From the viewpoint of the image quality of an obtained recorded matter, the ClogP value is preferably 1.0 or more and more preferably 1.5 or more. From the viewpoint of the ink preservation stability, the ClogP value is preferably 2.0 or less and more preferably 1.8 or less.

Specific examples of the organic solvent represented by General Formula (1) and having the ClogP value of 0.5 to 2.7 include ethylene glycol monobutyl ether, ethylene glycol monopentyl ether, ethylene glycol monohexyl ether (EGmHE, ClogP value: 1.9), ethylene glycol monoheptyl ether, ethylene glycol monooctyl ether, ethylene glycol monononyl ether, diethylene glycol monobutyl ether, diethylene glycol monopentyl ether, diethylene glycol monohexyl ether (DEGmHE, ClogP value: 1.76), diethylene glycol monoheptyl ether, diethylene glycol monooctyl ether, diethylene glycol mononony1 ether, diethylene glycol mono-2-ethylhexyl ether (DEGmEHE, ClogP value: 2.69),
triethylene glycol monobutyl ether, triethylene glycol monopentyl ether, triethylene glycol monohexyl ether (TEGmHE), triethylene glycol monoheptyl ether, triethylene glycol monooctyl ether, triethylene glycol monononyl ether, triethylene glycol mono-2-ethylhexyl ether,
propylene glycol monobutyl ether, propylene glycol monopentyl ether, propylene glycol monohexyl ether, propylene glycol monoheptyl ether, propylene glycol monooctyl ether, propylene glycol mono-2-ethylhexyl ether,
dipropylene glycol monobutyl ether, dipropylene glycol monopentyl ether, dipropylene glycol monohexyl ether, dipropylene glycol monoheptyl ether, dipropylene glycol monooctyl ether, dipropylene glycol mono-2-ethylhexyl ether, 2-(2-((2-ethylhexyl)oxy)ethoxy)ethanol (ClogP value: 2.69),
tripropylene glycol monobutyl ether, tripropylene glycol monopentyl ether, tripropylene glycol monohexyl ether, tripropylene glycol monoheptyl ether, tripropylene glycol monooctyl ether, tripropylene glycol mono-2-ethylhexyl ether, and the like.

Specific examples of the organic solvent represented by General Formula (2) and having the ClogP value of 0.5 to 2.7 include 1,2-hexanediol (ClogP value: 0.53), 1,2-heptanediol, 1,2-octanediol (ClogP value: 1.58), 1,2-nonanediol, 1,2-decanediol, 1-phenoxypropan-2-ol (ClogP value: 1.5), and the like.

Among these, examples of the organic solvent suitably include ethylene glycol monohexyl ether, diethylene glycol monohexyl ether, diethylene glycol mono-2-ethylhexyl ether, and 1,2-octanediol. Furthermore, the organic solvent represented by General Formula (1) or General Formula (2) and having the ClogP value of 1.5 to 2.0 is preferable.

From the viewpoint of image quality having good granularity, the organic solvent preferably includes diethylene glycol monohexyl ether (DEGmHE) and ethylene glycol monohexyl ether (EGmHE), and even more preferably includes diethylene glycol monohexyl ether (DEGmHE).

A content of the organic solvent is 1.0 mass% or more and less than 5.0 mass% with respect to total mass of ink. In a case where the content of the organic solvent is 1.0 mass% or more, the image quality is good. In a case where the content of the organic solvent is less than 5.0 mass%, ink preservation stability and jetting reliability become good. From the viewpoints of image quality and preservation stability of ink, the content of the organic solvent is more preferably 2.0 or more and less than 3.0.

<Surfactant>

The ink of the present disclosure includes the surfactant having the fluorine atom in the molecule. Thereby, the surface tension of ink can be lowered within a range that the ink jetting reliability is not impaired by adding a small amount of the surfactant, and an image quality having good granularity can be obtained.
The surfactant can be used as a surface tension adjuster.
In addition, the ink of the present disclosure can also contain 2 or more kinds of surfactants, as necessary.
As the surfactant, a compound having a structure having both a hydrophilic part and a hydrophobic part in a molecule and the like can be suitably used, and all of an anionic surfactant, a cationic surfactant, an amphoteric surfactant, a nonionic surfactant, and a betaine-based surfactant can be used.
In the present disclosure, from the viewpoint of suppressing coalescence of the jetted ink, an anionic surfactant is preferable.
Specific examples of the surfactant in the present disclosure include: a partially fluorinated phosphonic acid group-containing compound (for example, Capstone FS-63, manufactured by DuPont de Nemours, Inc.); a partially fluorinated alcohol-substituted glycol (for example, Capstone FS-63, manufactured by DuPont de Nemours, Inc.); a perfluoroalkyl compound (for example, Surflon (registered trademark) S-211, manufactured by AGC SEIMI CHEMICAL CO., LTD.); ammonium N,N-bis(for example, nonafluorobutanesulfonyl)imide (for example, F-top EF-N444, manufactured by Mitsubishi Materials Electronic Chemicals Co., Ltd.); potassium N,N-hexafluoropropane (for example, EFTOP EF-M302, manufactured by Mitsubishi Materials Electronic Chemicals Co., Ltd.); ammonium sulfate-containing hydrocarbon (for example, AQUALON KH-10, manufactured by DKS Co. Ltd.); and a modified polydimethylsiloxane (for example, BYK-345, manufactured by BYK Additives & Instruments).
From the viewpoint of reducing the surface tension of ink, a surfactant having a perfluoroalkyl group in a molecule, such as a perfluoroalkyl compound (for example, poly(perfluoroalkylethyl acrylate)), ammonium N,N-bis(nonafluorobutanesulfonyl)imide, and potassium N,N-hexafluoropropane, is more preferable.
From the viewpoint of jetting reliability of ink in a case of jetting ink by the ink jet method and interfacial tension between the ink and the substrate, a content of the surfactant in the present disclosure in which the surface tension of ink can be adjusted into a range of 25 mN/m or higher and lower than 35 mN/m is contained. The specific content of the surfactant is 0.001 mass% or more and less than 0.1 mass% with respect to the total mass of a composition. In a case where the content is 0.001 mass% or more, the wettability becomes good and an image having good granularity is obtained. On the other hand, in a case where the content is less than 0.1 mass%, good jetting reliability is obtained.
From the viewpoint of jetting reliability of ink and interfacial tension between the ink and the substrate, the content is preferably 0.03 mass% to 0.07 mass%.

<Coloring material>

The ink of the present disclosure contains a coloring material.
As the coloring material, well-known dyes, pigments, and the like can be used without particular limitation. Among these, from the viewpoint of ink colorability, it is preferable that the coloring material is almost insoluble in water or hardly soluble. Specifically, examples thereof include various kinds of pigments, dispersed dyes, oil-soluble dyes, and coloring agents for forming a J-aggregate, and pigments are more preferable.
According to the present disclosure, a water-insoluble pigment or a pigment surface-treated with a dispersant described below can be used as the coloring material.
The pigment used in the present disclosure is not particularly limited, and well-known organic or inorganic pigments in the related art can be used. Examples thereof include a polycyclic pigment such as azo lake, an azo pigment, a phthalocyanine pigment, a perylene and perinone pigment, an anthraquinone pigment, a quinacridone pigment, a dioxazine pigment, a diketopyrrolopyrrole pigment, a thioindigo pigment, an isoindolinone pigment, and a quinophthalone pigment, dye-type lake such as basic dye-type lake and acidic dye-type lake, an organic pigment such as a nitro pigment, a nitroso pigment, aniline black, and a daylight fluorescent pigment, and an inorganic pigment such as titanium oxide, an iron oxide-based pigment, and a carbon black-based pigment. Any pigment that is not described in a color index can be used as long as it can be dispersed in a water phase. Pigments surface-treated with a surfactant, a polymer dispersant, or the like, or graft carbon and the like can be used. Among these pigments, it is particularly preferable to use an azo pigment, a phthalocyanine pigment, an anthraquinone pigment, a quinacridone pigment, or a carbon black-based pigment.
A content of the coloring material is preferably 1.0 mass% to 6.0 mass% and more preferably 2.0 mass% to 5.0 mass% with respect to a total ink content.

<Water>

The ink of the present disclosure contains water.

The amount of the water is not particularly limited, and the content of the water is preferably 10 mass% to 95 mass%, more preferably 30 mass% to 80 mass%, and even more preferably 50 mass% to 70 mass% with respect to the total mass of ink.

<Other components>

The ink of the present disclosure may contain other components.

Examples of the other components include a dispersant, resin particles, and a polymerization initiator.

(Resin particle)

The ink of the present disclosure includes resin particles including a resin containing 1 mass% to 20 mass% of a monomer unit c-1 which has a ClogP value more than the ClogP value of the organic solvent and has an anionic group, with respect to the total mass of the resin.

The resin particles are resin particles including a resin and may include a core agent or the like in addition to the resin, but are preferably resin particles only consisting of a resin.

Among the monomer units constituting the resin, the monomer unit having an anionic group particularly greatly contributes to the stability in the ink of the resin particles. Therefore, it is presumed that the ClogP value of the monomer unit having an anionic group is particularly important to the dispersibility of the resin particle, and greatly influences on the jetting reliability, the preservation stability of ink, and the image quality of an obtained image.

-Monomer unit c-1-

~ClogP value~

The ClogP value of the monomer unit c-1 is preferably more than the ClogP value of the organic solvent.

In the present disclosure, the ClogP value of the monomer unit c-1 is calculated as a ClogP value of a structure in a polymer with ChemBioDraw Ultra 13.0.

In the calculation, a counter ion of the anionic group is calculated as $H^+$.

From the viewpoint of the jetting reliability and the preservation stability of ink, a difference ((ClogP value of organic solvent) - (ClogP value of monomer unit c-1)) between the ClogP value of the organic solvent and the ClogP value of the monomer unit c-1 is preferably 0.2 or more, more preferably 0.8 or more, and even more preferably 1.5 or more.

~Anionic group~

In the present disclosure, the anionic group refers to a group for forming an anion in ink.

Examples of the anionic group included in the monomer unit c-1 include a sulfonic acid group, a phosphoric acid group, a phosphonic acid group, and a carboxy group, and from the viewpoint of high hydrophobicity and the excellent jetting reliability and the excellent preservation stability of ink, a carboxy group is preferable.

The anionic group may form a salt, and may form a quaternary ammonium salt, an alkali metal salt, an alkali earth metal salt, or the like.

~Content of monomer unit c-1~

The content of the monomer unit c-1 is preferably 1 mass% to 20 mass% with respect to the total mass of the resin, and from the viewpoint of the jetting reliability of ink, the content thereof is preferably 1.5 mass% to 18 mass% and more preferably 2 mass% to 12 mass %.

The resin particle used in the present disclosure may contain only one kind of the monomer unit c-1 and may contain two or more kinds thereof. In a case where the resin particle used in the present disclosure contains two or more kinds of the monomer units c-1, the content refers to a total content of the two or more kinds of the monomer units c-1.

~Monomer unit represented by General Formula (3)~

The monomer unit c-1 is preferably a monomer unit represented by the following General Formula (3).

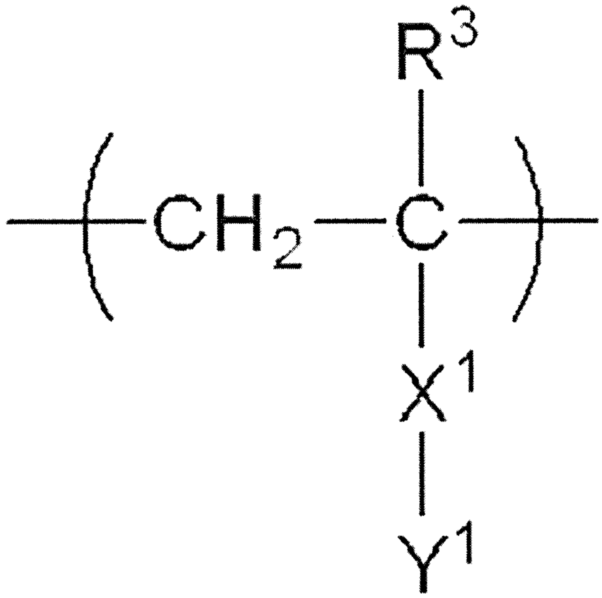

General Formula (3)

In General Formula (3), $R^3$ represents a hydrogen atom or an alkyl group having 1 to 4 carbon atoms, $X^1$ represents a divalent linking group, $Y^1$ represents an anionic group, and in $X^1$ and $Y^1$, an atom farthest from a main chain is disposed 9 atoms to 27 atoms away from the main chain.
In General Formula (3), $R^3$ is preferably a hydrogen atom or a methyl group.
In General Formula (3), $X^1$ is preferably -C(=O)O-, -C(=O)$NR^4$-, an alkylene group, an arylene group, or a group represented by bonding these, and more preferably -C(=O)O-, - C(=O)$NR^4$-, an alkylene group having 6 to 22 carbon atoms, an arylene group having 6 to 20 carbon atoms, or a group represented by bonding these.
In a case where $X^1$ includes -C(=O)O- or -C(=O)$NR^4$-, it is preferable that a carbon atom to which $R^3$ in General Formula (3) is bonded and a carbon atom (excluding a carbon atom included in $R^4$) in -C(=O)O- or -C(=O)$NR^4$- are directly bonded to each other.
$R^4$ represents a hydrogen atom or an alkyl group having 1 to 4 carbon atoms, is preferably a hydrogen atom or a methyl group and more preferably a hydrogen atom.
In General Formula (3), $Y^1$ is preferably -C(=O)OM, -S(=O)$_2$OM, or -OP(=O)(OM)$_2$ and more preferably -C(=O)OM.
M represents a hydrogen atom, an alkali metal ion, or an ammonium ion.
In General Formula (3), in $X^1$ and $Y^1$, an atom farthest from the main chain is preferably disposed 10 atoms to 23 atoms away from the main chain and more preferably 12 atoms to 20 atoms away from the main chain.

~Monomer unit represented by General Formula (4) or General Formula (5)~

The monomer unit c-1 is preferably a monomer unit represented by the following General Formula (4) or General Formula (5) and more preferably a monomer unit represented by General Formula (4).

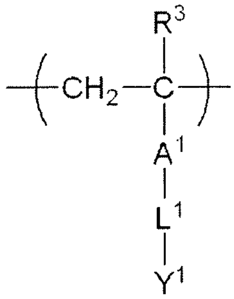 General Formula (4)

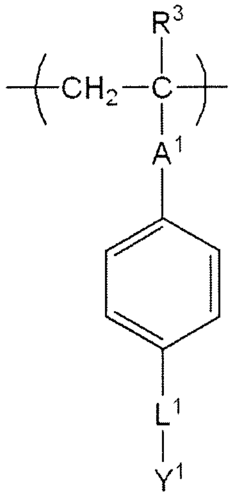 General Formula (5)

In General Formula (4) or (5), $R^3$ represents a hydrogen atom or an alkyl group having 1 to 4 carbon atoms, $A^1$ represents a single bond, -C(=O)O-, or -C(=O)$NR^4$-, $R^4$ represents a hydrogen atom or an alkyl group having 1 to 4 carbon atoms, $L^1$ represents a divalent linking group having 6 to 22 carbon atoms, $Y^1$ represents an anionic group, and in $L^1$ and $Y^1$, an atom farthest from a main chain is disposed 9 atoms to 27 atoms away from the main chain.

In General Formula (4) or (5), $R^3$ is the same as $R^3$ in General Formula (3), and preferable aspects thereof are also the same.

In General Formula (4), $A^1$ is preferably -C(=O)O-, or -C(=O)$NR^4$-.

In General Formula (5), $A^1$ is preferably a single bond.

In General Formula (4) or (5), a bonding direction of -C(=O)O- or -C(=O)$NR^4$- is not particularly limited, but is preferably a direction in which the carbon atom in -C(=O)O- or - C(=O)$NR^4$- and the carbon atom to which $R^3$ in General Formula (4) or (5) is bonded are directly bonded to each other.

$R^4$ is preferably a hydrogen atom or a methyl group and more preferably a hydrogen atom.

In General Formula (4), $L^1$ preferably represents an alkylene group having 6 to 22 carbon atoms. The alkylene group may be linear or branched, and is preferably linear from the viewpoint of the jetting stability and the stability of the resin particles. $L^1$ is an alkylene group preferably having 8 to 22 carbon atoms, more preferably having 8 to 16 carbon atoms, and even more preferably having 10 to 12 carbon atoms.

In General Formula (5), $L^1$ is preferably a divalent linking group having 6 to 20 carbon atoms. The divalent linking group is not particularly limited, and from the viewpoint of synthesis suitability, -C(=O)$NR^4$-$(CH_2)_n$- or -C(=O)O-$(CH_2)_n$- is preferable, and - C(=O)$NR^4$-$(CH_2)_n$- is more preferable. Here, $R^4$ is a hydrogen atom or an alkyl group having 1 to 4 carbon atoms and is preferably a hydrogen atom. n is an integer of 5 to 18, more preferably 7 to 15, and more preferably 10 to 12.

In General Formula (4) or (5), $Y^1$ is preferably -C(=O)OM, -S$(=O)_2$OM, or -OP(=O) $(OM)_2$ and more preferably -C(=O)OM.

M represents a hydrogen atom, an alkali metal ion, or an ammonium ion.

In General Formula (4) or (5), in $L^1$ and $Y^1$, an atom farthest from the main chain is preferably disposed 10 atoms to 23 atoms away from the main chain and more preferably 12 atoms to 20 atoms away from the main chain.

Hereinafter, preferable specific examples of the monomer unit c-1 are provided, but the present invention is not limited thereto. In the following specific example, n represents the number of repetitions, and R represents a hydrogen atom or an alkyl group having 1 to 4 carbon atoms.

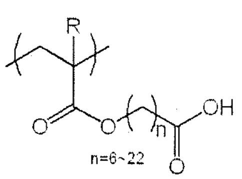
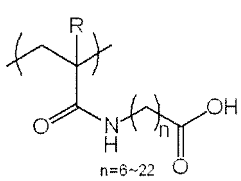
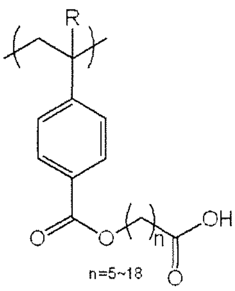
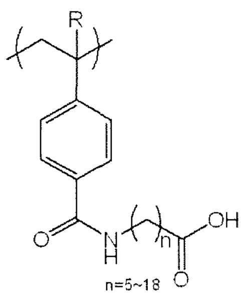

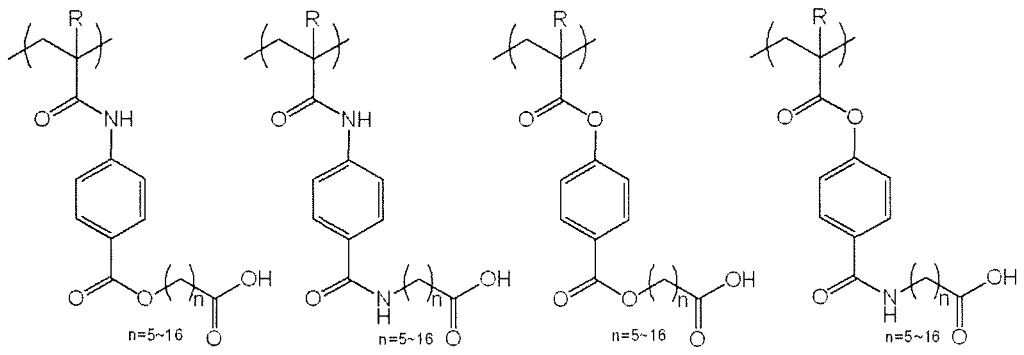

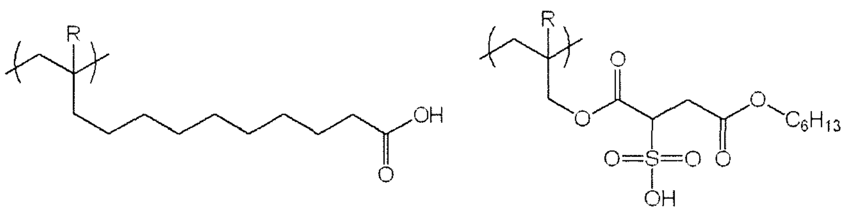

-Monomer unit c-2-

It is preferable that the resin further contains a monomer unit c-2 (hereinafter, simply referred to as a "monomer unit c-2") derived from an ethylenically unsaturated compound having an aromatic ring structure or an alicyclic structure.

-Aromatic ring structure or alicyclic structure-

Examples of the aromatic ring structure or an alicyclic structure included in the monomer unit c-2 include a benzene ring, a naphthalene ring, an anthracene ring and an aliphatic hydrocarbon ring having 5 to 20 carbon atoms, and a benzene ring and an aliphatic hydrocarbon ring having 6 to 10 carbon atoms are preferable.
These aromatic ring structures or alicyclic structures may have a substituent in a ring structure.

~Ethylenically Unsaturated Compound Having Aromatic ring Structure or Alicyclic Structure~

The ethylenically unsaturated compound having an aromatic ring structure or an alicyclic structure which is a monomer constituting the monomer unit c-2 is preferably an ethylenically unsaturated compound having an ethylenically unsaturated group at a compound terminal, more preferably styrene or a (meth)acrylate compound, or a (meth)acrylamide compound which may have a substituent, and even more preferably styrene or a (meth)acrylate compound which may have a substituent.
Examples of the ethylenically unsaturated compound include styrene, benzyl (meth)acrylate, isobornyl (meth)acrylate, cyclohexyl (meth)acrylate, and dicyclopentanyl (meth)acrylate.

~Content of monomer unit c-2~

From the viewpoint of the jetting reliability of ink, the content of the monomer unit c-2 is preferably 5 mass% to 90 mass% and more preferably 10 mass% to 50 mass% with respect to the total mass of the resin.
The resin particle used in the present disclosure may contain only one kind of the monomer unit c-2 or may contain two or more kinds thereof. In a case where the resin particle used in the present disclosure contains two or more kinds of the monomer units c-2, the content refers to a total content of the two or more kinds of the monomer units c-2.

~Monomer unit represented by any one of Formulae A to E~

From the viewpoint of the rub resistance of an obtained image, the monomer unit c-2 preferably includes a monomer unit represented by any one of Formulae A to E, and from the viewpoint of the jetting reliability of ink, the monomer unit c-2 more preferably includes a monomer unit represented by the following Formula A.

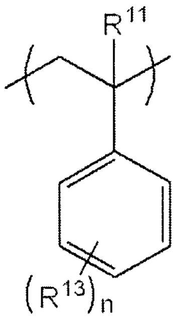

Formula A

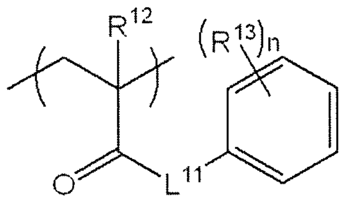

Formula B

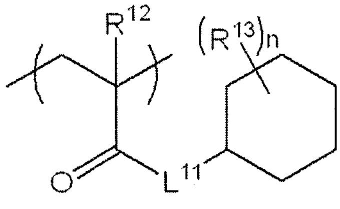

Formula C

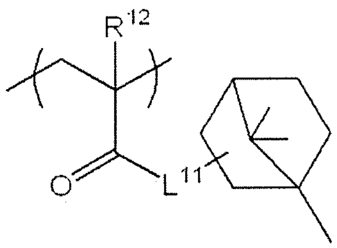

Formula D

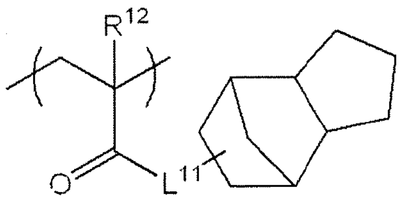

Formula E

In Formulae A to E, $R^{11}$ and $R^{12}$ each independently represent a methyl group or a hydrogen atom, $R^{13}$'s each independently represent a linear or branched alkyl group having 1 to 10 carbon atoms, n is an integer of 0 to 5, $L^{11}$ represents a single bond, or a linear or branched alkylene group having 1 to 18 carbon atoms which may have a ring structure, an arylene group having 6 to 18 carbon atoms, -O-, -NH-, -S-, -C(=O)-, or a divalent linking group formed by linking two or more thereof.

In Formula A, $R^{11}$ is preferably a hydrogen atom.

In Formulae B to E, $R^{12}$ is preferably a methyl group.

In Formulae A to C, $R^{13}$ each independently are preferably a linear or branched alkyl group having 1 to 4 carbon atoms and more preferably a methyl group or an ethyl group.

In Formulae A to C, n is preferably an integer of 0 to 2, more preferably 0 or 1, and even more preferably 0.

In Formula B, $L^{11}$ is preferably a divalent linking group including at least -O- or -NH-at a bonding site to a carbon atom bonded to a carbonyl group described in Formula B, more preferably a divalent linking group including at least -O- or -NH- at a bonding site to a carbon atom bonded to the carbonyl group and including a linear or branched alkylene group that has 1 to 18 carbon atoms and may have a ring structure, even more preferably $-OCH_2-$ or - $NHCH_2-$, and particularly preferably $-OCH_2-$.

In Formulae C to E, $L^{11}$ is preferably a divalent linking group at least including -O- or -NH- to a bonding site to a carbon atom bonded to a carbonyl group described in Formulae C to E, more preferably -O- or -NH-, and even more preferably -O-.

The monomer unit represented by Formula A is preferably a monomer unit derived from styrene.

The monomer unit represented by Formula B is preferably a monomer unit derived from benzyl (meth)acrylate.

The monomer unit represented by Formula C is preferably a monomer unit derived from cyclohexyl (meth)acrylate.

The monomer unit represented by Formula D is preferably a monomer unit derived from isobornyl (meth)acrylate.

The monomer unit represented by Formula E is preferably a monomer unit derived from dicyclopentanyl (meth)acrylate.

~Content of monomer unit represented by Formula A~

From the viewpoint of rub resistance of the obtained image, the content of the monomer unit represented by Formula A is preferably 1 mass% to 20 mass% with respect to the total mass of the resin, and from the viewpoint of jetting reliability of ink, the content thereof is preferably 5 mass% to 90 mass% and more preferably 10 mass% to 50 mass%.

-Another monomer unit c-3-

The resin may contain another monomer unit c-3 (hereinafter, simply referred to as a "monomer unit c-3") in addition to the monomer units c-1 and c-2.

The monomer unit c-3 is not particularly limited, but is preferably a monomer unit derived from a (meth)acrylamide compound or a (meth)acrylate compound and more preferably a monomer unit derived from a (meth)acrylate compound.

It is preferable that the monomer unit c-3 does not include an anionic group.

The monomer unit c-3 is preferably an alkyl (meth)acrylate compound in which the alkyl group has 1 to 10 carbon atoms. The alkyl group may be linear or branched and may have a cyclic structure.

~Content of monomer unit c-3~

From the viewpoint of the jetting reliability and the rub resistance, the content of the monomer unit c-3 is preferably 0 mass% to 90 mass% and more preferably 0 mass% to 70 mass% with respect to the total mass of the resin.

The resin particle used in the present disclosure may contain only one kind of the monomer unit c-3 and may contain two or more kinds thereof. In a case where the resin particle used in the present disclosure contains two or more kinds of the monomer units c-3, the content thereof refers to a total content of the two or more kinds of the monomer units c-3.

-Characteristics of resin-

~Amount of anionic group~

From the viewpoint of dispersibility of the resin particles, the content of the anionic group in the resin is preferably 0.05 mmol/g to 0.7 mmol/g and more preferably 0.1 mmol/g to 0.4 mmol/g with respect to a total mass of the resin.

~Weight-Average Molecular Weight of Resin~

The weight-average molecular weight (Mw) of the resin is preferably 10,000 to 1,000,000 and more preferably 20,000 to 500,000.

In the present disclosure, the weight-average molecular weight is measured by gel permeation chromatography (GPC). Three of the GPCs were connected in series using HLC-8220GPC (manufactured by Tosoh Corporation), using TSKgeL SuperHZM-H, TSKgeL SuperHZ4000, and TSKgel SuperHZ2000 (all trade names manufactured by Tosoh Corporation) as columns, and using THF (tetrahydrofuran) as an eluent. As conditions, the sample concentration is 0.45 mass%, the flow rate is 0.35 ml/min, the sample injection amount is 10 μl, the measurement temperature is 40°C, and the differential refractive index detector is used. The calibration curve was obtained using eight samples of "Standard sample TSK standard, polystyrene" manufactured by Tosoh Corporation: "F-40", "F-20", "F-4", "F-1", "A-5000", "A-2500", "A-1000", and "n-propylbenzene".

~Glass transition temperature of resin~

From the viewpoint of rub resistance of the obtained image, the glass transition temperature (Tg) of the resin is preferably 30°C to 120°C, more preferably 50°C to 100°C, and even more preferably 70°C to 100°C.

As the glass transition temperature (Tg), measurement Tg that can be obtained by actual measurement is applied.

Specifically, the measurement Tg means a value measured under ordinary measurement conditions using a differential scanning calorimeter (DSC) EXSTAR6220 manufactured by SII Nano Technology Inc. Here, in a case where the measurement is difficult due to decomposition of a material or the like, the calculation Tg calculated by the following calculation expression is applied. The calculation Tg is a value calculated by the following expression (1).

$$1/Tg = \Sigma(Xi/Tgi) \ldots (1)$$

Here, it is assumed that n kinds of monomer components from i = 1 to n are copolymerized as a polymer to be calculated. Xi is the mass fraction (∑Xi = 1) of the i-th monomer, and Tgi is the glass transition temperature (absolute temperature) of the homopolymer of the i-th monomer. Here, ∑ is the sum of from i = 1 to n. The value of the homopolymer glass transition temperature (Tgi) of each monomer is a value of Polymer Handbook (3rd Edition) (written by J. Brandrup,

E. H. Immergut (Wiley-Interscience, 1989)).

~Particle diameter of resin particle~

From the viewpoint of jetting reliability of ink, the volume average particle diameter of the resin particles used in the present disclosure is preferably 1 nm to 200 nm, more preferably 5 nm to 100 nm, and most preferably 10 nm to 50 nm.
The volume average particle diameter can be measured by a particle size distribution determination device using light scattering (for example, Microtrac UPA (registered trademark) EX 150 manufactured by Nikkiso Co., Ltd.).

-Method of manufacturing resin particles-

The resin particle is not particularly limited, but is preferably prepared by an emulsion polymerization method. The emulsion polymerization method is a method of preparing resin particles by polymerizing an emulsion prepared by adding a monomer, a polymerization initiator, an emulsifier, as necessary, a chain transfer agent, and the like in an aqueous medium (for example, water). In a case where the emulsion polymerization method is applied to the preparation of the resin particle, the monomer for forming the monomer unit c-1 can also function as an emulsifier. Accordingly, an emulsifier in addition to the monomer for forming the monomer unit c-1 is not separately required to be mixed, but an existing emulsifier can be separately added as long as the emulsifier may be added in a range of not deteriorating the jetting reliability and the image quality in a case where the ink is prepared.

-Content of resin particles-

From the viewpoint of the preservation stability of ink and the rub resistance of the obtained image, the content of the resin particle is preferably 1 mass% to 20 mass%, more preferably 1 mass% to 10 mass%, and even more preferably 2 mass% to 10 mass% with respect to the total mass of ink.

-Specific example of resin included in resin particles-

The specific examples of the resin included in the resin particles are provided below, but the present disclosure is not limited thereto. The resin particle used in the present disclosure is preferably a resin particle including these resins. In the following specific examples, n represents the number of repetitions, the description of mass% means the content mass% of each monomer unit, and a numerical value in the section of Mw represents a weight-average molecular weight.

[Table 1]

| | Monomer unit c-1 | Monomer unit c-2 | Monomer unit c-3 | Mw (ten thousand) | Tg (°C) |
|---|---|---|---|---|---|
| C-1 | 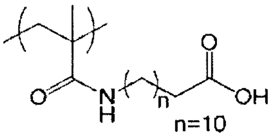 n=10 7 mass% | 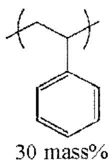 30 mass% | 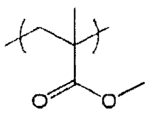 63 mass% | 25 | 96 |
| C-2 | 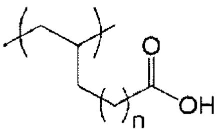 7 mass% n=7 | 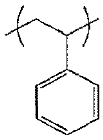 30 mass% | 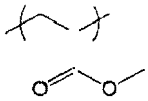 63 mass% | 26 | 94 |
| C-3 | 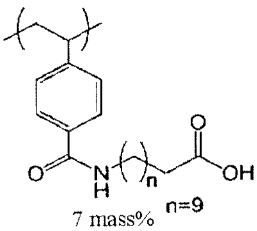 7 mass% n=9 | 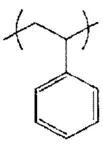 30 mass% | 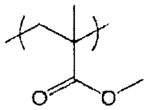 63 mass% | 28 | 96 |

(continued)

| | Monomer unit c-1 | Monomer unit c-2 | Monomer unit c-3 | Mw (ten thousand) | Tg (°C) |
|---|---|---|---|---|---|
| C-4 | 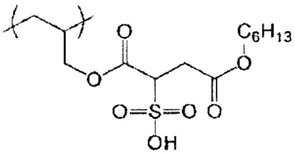 7 mass% | 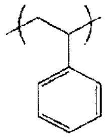 30 mass% | 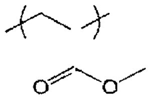 63 mass% | 22 | 95 |
| C-5 | 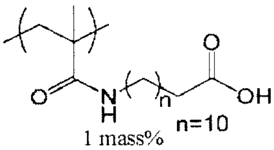 1 mass% | 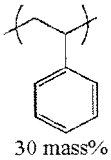 30 mass% | 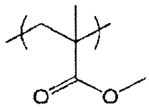 69 mass% | 27 | 103 |
| C-6 | 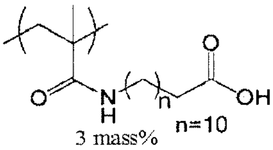 3 mass% | 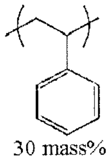 30 mass% | 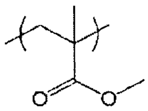 67 mass% | 22 | 101 |
| C-7 | 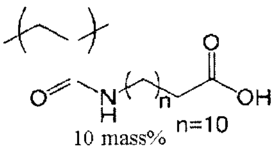 10 mass% | 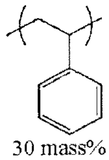 30 mass% | 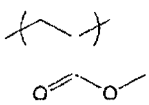 60 mass% | 21 | 94 |
| C-8 | 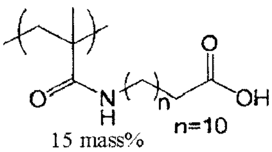 15 mass% | 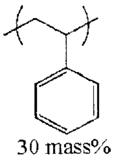 30 mass% | 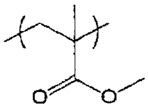 55 mass% | 24 | 89 |
| C-9 | 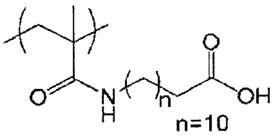 20 mass% | 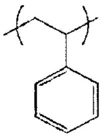 30 mass% | 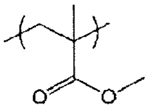 50 mass% | 28 | 84 |

[Table 2]

| | Monomer unit c-1 | Monomer unit c-2 | Monomer unit c-3 | Mw (ten thousand) | Tg (°C) |
|---|---|---|---|---|---|
| C-10 | 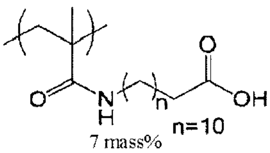 7 mass% | 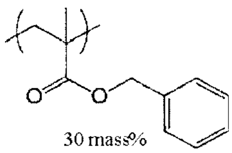 30 mass% | 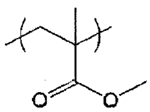 63 mass% | 30 | 83 |
| C-11 | 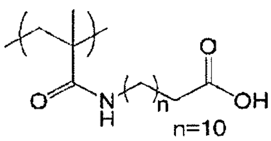 7 mass% | 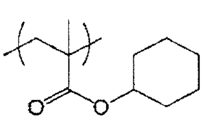 30 mass% | 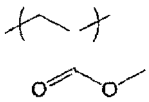 63 mass% | 22 | 78 |

(continued)

| | Monomer unit c-1 | Monomer unit c-2 | Monomer unit c-3 | Mw (ten thousand) | Tg (°C) |
|---|---|---|---|---|---|
| C-12 | 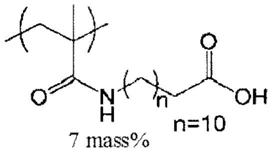 7 mass% | 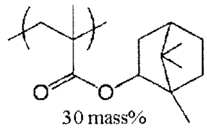 30 mass% | 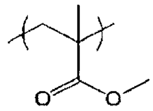 63 mass% | 25 | 115 |
| C-13 | 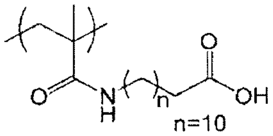 7 mass% | 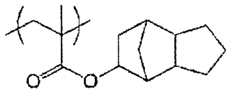 30 mass% | 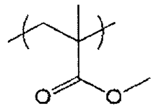 63 mass% | 20 | 118 |
| C-14 | 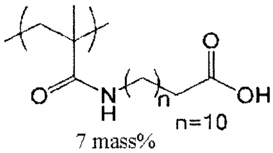 7 mass% | 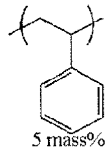 5 mass% | 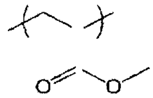 88 mass% | 28 | 98 |
| C-15 | 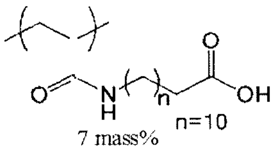 7 mass% | 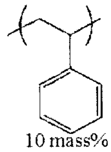 10 mass% | 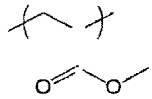 83 mass% | 20 | 98 |
| C-16 | 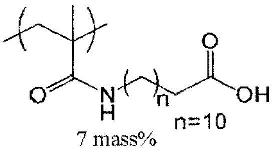 7 mass% | 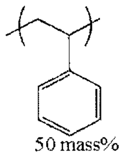 50 mass% | 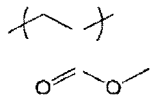 43 mass% | 15 | 95 |
| C-17 | 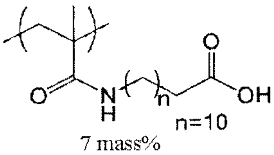 7 mass% | 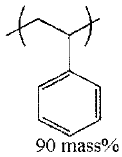 90 mass% | 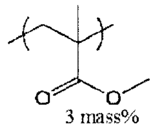 3 mass% | 18 | 93 |
| C-18 | 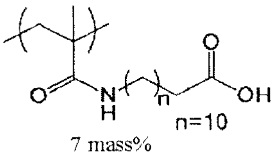 7 mass% | 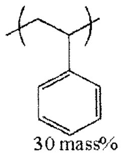 30 mass% | 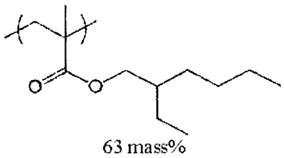 63 mass% | 23 | 24 |

[Table 3]

| | Monomer unit c-1 | Monomer unit c-2 | Monomer unit c-3 | Mw (ten thousand) | Tg (°C) |
|---|---|---|---|---|---|
| C-19 | 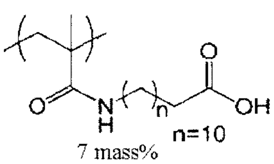 7 mass% | 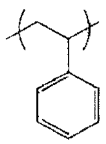 46 mass% | 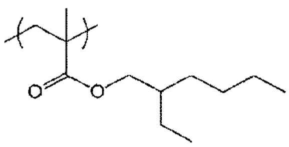 47 mass% | 25 | 42 |

(continued)

| | Monomer unit c-1 | Monomer unit c-2 | Monomer unit c-3 | Mw (ten thousand) | Tg (°C) |
|---|---|---|---|---|---|
| C-20 | 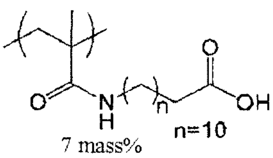 n=10 7 mass% | 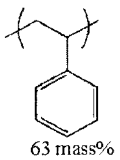 63 mass% | 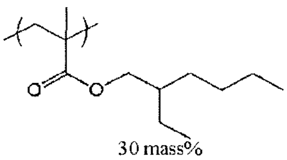 30 mass% | 28 | 60 |
| C-21 | 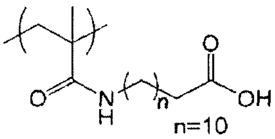 n=10 7 mass% | 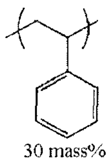 30 mass% | 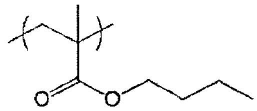 63 mass% | 15 | -4 |
| C-22 | 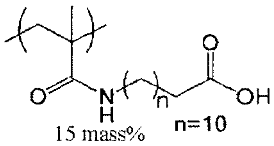 n=10 15 mass% | 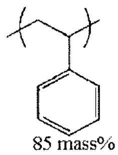 85 mass% | - | 23 | 86 |

The resin fine particles used in the present disclosure are preferably dispersed in the ink according to the present disclosure.

The resin particle used in the present disclosure is preferably a self-dispersing resin particle.

Here, the self-dispersing resin particle refers to a resin particle including a water-insoluble resin which can be in dispersion state in an aqueous medium by a functional group (particularly, a hydrophilic group such as an acidic group or a salt of the acidic group) possessed by the resin itself in a case of being in a dispersion state by a phase-transfer emulsification method in the absence of a surfactant.

Here, the dispersion state in the present disclosure includes both states of an emulsion state (emulsion) in which a water-insoluble resin is dispersed in a liquid state in an aqueous medium and a dispersion state (suspension) in which a water-insoluble resin is dispersed in a solid state in an aqueous medium.

The expression "water-insoluble" means that an amount of dissolution in 100 parts by mass of water at 25°C is 5.0 parts by mass or less.

The resin particle used in the present disclosure does not function as a dispersant of a pigment, and thus do not contain a pigment inside the particles.

(Polymerization Initiator)

The polymerization initiator is not particularly limited, and inorganic persulfate (for example, potassium persulfate, sodium persulfate, and ammonium persulfate), an azo-based initiator (for example, 2,2'-azobis(2-amidinopropane) dihydrochloride, and 2,2'-azobis[2-methyl-N-(2-hydroxyethyl)-propionamide]), organic peroxide (for example, t-butyl peroxypivalate and t-butyl hydroperoxide), and the like, or a salt thereof can be used. These can be used singly or two or more kinds thereof may be used in combination.

Among these, it is preferable to use an azo-based initiator or organic peroxide.

The use amount of the polymerization initiator used in the present disclosure is preferably 0.01 mass% to 2 mass% and more preferably 0.2 mass% to 1 mass% with respect to the total mass of the monomer components.

(Chain Transfer Agent)

As the chain transfer agent, well-known compounds such as carbon tetrahalide, dimers of styrenes, dimers of (meth)acrylic esters, mercaptans, and sulfides can be used. Among these, dimers and mercaptans of styrenes described in JP1993-017510A (JP-H05-017510A) can be suitably used.

(Dispersant)

In a case where the ink of the present disclosure contains a pigment as a coloring material, it is preferable that the pigment is dispersed by the dispersant.

For example, it is preferable that, in a case of preparing the ink, a pigment dispersion liquid in which the pigment is dispersed in water or an aqueous medium including water and an organic solvent by the dispersant is prepared in advance, and this is used as a raw material of the ink.

The dispersant of the pigment may be a polymer dispersant or a low-molecular-weight surfactant-type dispersant. A polymer dispersant may be any one of a water soluble dispersant or a water insoluble dispersant.

With respect to the low-molecular-weight surfactant-type dispersant, for example, well-known low-molecular-weight surfactant-type dispersants disclosed in paragraphs 0047 to 0052 of JP2011-178029A can be used.

Among the polymer dispersants, examples of the water soluble dispersant include a hydrophilic macromolecular compound. Examples of the natural hydrophilic macromolecular compound include a vegetable polymer such as gum arabic, tragacanth gum, guar gum, karaya gum, locust bean gum, arabinogalactone, pectin, and quince seed starch, a seaweed-based polymer such as alginic acid, carrageenan, and agar, an animal-based polymer such as gelatin, casein, albumin, and collagen, and a microbial polymer such as xanthan gum and dextran.

Examples of the hydrophilic macromolecular compounds obtained by modifying a natural product with a raw material include a cellulosic polymer such as methyl cellulose, ethyl cellulose, hydroxyethyl cellulose, hydroxypropyl cellulose, and carboxymethyl cellulose, a starch-based polymer such as sodium starch glycolate and sodium starch phosphate ester, and a seaweed-based polymer such as sodium alginate and propylene glycol alginate.

Examples of the synthetic hydrophilic polymer compound include a vinyl-based polymer such as polyvinyl alcohol, polyvinyl pyrrolidone, and polyvinyl methyl ether; an acrylic resin such as uncrosslinked polyacrylamide, poly (meth)acrylic acid or an alkali metal salt thereof, a (meth)acrylic acid copolymer of (meth)acrylic acid and another monomer, and a water soluble styrene acrylic resin; a water soluble styrene maleic acid resin, a water soluble vinyl naphthalene acrylic resin, a water soluble vinyl naphthalene maleic acid resin, polyvinyl pyrrolidone, polyvinyl alcohol, an alkali metal salt of a β-naphthalenesulfonic acid formalin condensate, a polymer compound having a salt of a cationic functional group such as quaternary ammonium or an amino group in a side chain, and a natural polymer compound such as shellac.

A water soluble dispersant into which a carboxy group is introduced, such as a homopolymer of acrylic acid, methacrylic acid, or styrene acrylic acid and a copolymer of at least one of acrylic acid, methacrylic acid, or styrene acrylic acid with a monomer having another hydrophilic group is preferable as a hydrophilic macromolecular compound.

Among the polymer dispersant, as the water insoluble dispersant, a polymer having both of the hydrophobic part and a hydrophilic part can be used. Examples thereof preferably include a styrene-(meth)acrylic acid copolymer, a styrene-(meth)acrylic acid-(meth)acrylic acid ester copolymer, a (meth)acrylic acid ester-(meth)acrylic acid copolymer, a polyethylene glycol (meth)acrylate-(meth)acrylic acid copolymer, a vinyl acetate-maleic acid copolymer, and a styrene-maleic acid copolymer.

The weight-average molecular weight of the polymer dispersant is preferably 3,000 to 100,000, more preferably 5,000 to 50,000, even more preferably 5,000 to 40,000, and particularly preferably 10,000 to 40,000.

The mixing mass ratio (p:s) of the pigment (p) and the dispersant (s) is preferably in the range of 1:0.06 to 1:3, more preferably in the range of 1:0.125 to 1:2, and even more preferably in the range of 1:0.125 to 1:1.5.

The ink of the present disclosure may further contain well-known additives such as an ultraviolet absorbing agent, an antifading agent, an antibacterial agent, a pH adjuster, a rust inhibitor, an antioxidant, an emulsification stabilizer, a preservative, an antifoaming agent, a viscosity adjuster, a dispersion stabilizer, a chelating agent, and a solid wetting agent.

The well-known additives can be used without particular limitation as long as the additives are well-known additives in the field of ink.

~Physical properties of ink~

(Viscosity)

The viscosity of the ink according to the present disclosure at 30°C is preferably 1.2 mPa·s to 15.0 mPa·s, more preferably 2.0 mPa·s to 13.0 mPa·s, and even more preferably 2.5 mPa·s to 10.0 mPa·s.

The viscosity of the ink is measured at a temperature of 30°C by using VISCOMETER TV-22 (manufactured by TOKI SANGYO CO. LTD.).

(pH)

From the viewpoint of the preservation stability of ink, with respect to the pH of the ink of the present disclosure, pH at 25°C is preferably 6.0 to 11.0, more preferably 7.0 to 10.0, and even more preferably 7.0 to 9.0.

pH of the ink is measured by using pH meter WM-50EG (manufactured by DKK-TOA Corporation) under the environment of 25°C.

<<ink jet recording method>>

An ink jet recording method according to an embodiment of the present disclosure includes a step of recording an image by jetting ink of the present disclosure described above onto a substrate by an ink jet method (hereinafter, also referred to as "ink jetting step").

As necessary, the ink jet recording method according to the embodiment of the present disclosure may further include another step such as a step of drying and removing water and an organic solvent such as the organic solvent in the ink jetted onto the substrate (hereinafter, referred to as an "ink drying step") or a step of melting and fixing the resin particle included in the ink (hereinafter, referred to as a "thermal fixing step").

The ink jetting step is preferably a step of recording an image by directly jetting the ink of the present disclosure onto a low water-absorptive substrate or a non-water-absorptive substrate.

The expression "directly jetting the ink onto a low water-absorptive substrate or a non-water-absorptive substrate" means that the jetted ink and the low water-absorptive substrate or the non-water-absorptive substrate are in direct contact with each other.

In addition, the ink jet recording method according to the embodiment of the present disclosure is preferably a method in which the above described known treatment liquid is not jetted before the ink jetting step.

That is, the ink jet recording method according to the embodiment of the present disclosure preferably does not include a step of jetting the well-known treatment liquid.

In the ink jet method using the ink in the related art, particularly, in a case where the low water-absorptive substrate or the non-water-absorptive substrate is used as the substrate, for example, there is a known method of using a precoat liquid or a topcoat liquid, aggregating components in the ink jetted onto the substrate, and suppressing spreading of the ink to improve the image quality.

However, in a case where the ink of the present disclosure is used, the image quality of the obtained image is excellent, and thus even in a case where an image is recorded on the low water-absorptive substrate or the non-water-absorptive substrate without using the precoat liquid or the topcoat liquid, it is possible to obtain an image having excellent image quality.

<Ink jetting step>

In the ink jetting step, the ink of the present disclosure is jetted onto the substrate by the ink jet method. In the present step, it is possible to selectively jet the ink onto the substrate and can record a desired visible image. The details of the ink such as the details and the preferable aspects of the ink are as described in the description of the ink.

In the image record by the ink jet method, energy is supplied and the aforementioned ink onto a desired substrate is jetted to form an image. As the ink jet method preferably used in the present disclosure, a method described in paragraphs 0093 to 0105 of JP2003-306623A can be applied.

The ink jet method is not particularly limited, and for example, the well-known method may be any one of an electric charge control method of jetting ink using electrostatic attraction force, a drop-on-demand method (pressure pulse method) using vibration pressure of a piezoelectric element, an acoustic ink jet method of converting an electric signal into an acoustic beam, irradiating the ink with the acoustic beam, and jetting the ink by using the radiation pressure, or a thermal ink jet method (BUBBLE JET (registered trademark)) of heating the ink, forming bubbles, and using generated pressure. As the ink jet method, particularly, an ink jet method in which ink subjected to an action of thermal energy causes a sudden volume change by a method described in JP1979-059936A (JP-S54-059936A), and the action force due to this state change jets ink from a nozzle can be effectively used. Furthermore, a roll-to-roll ink jet method can be effectively used as the ink jet method.

The ink jet method includes a method of jetting a large amount of low density ink called photo ink in a small volume, a method of improving image quality by using a plurality of kinds of ink having substantially the same hue and having different density, and a method of using colorless and transparent ink.

As the ink jet head, there are a shuttle method in which a short serial head is used and recording is performed while scanning the head in the width direction of the substrate; and a line method using a line head in which recording elements are arranged corresponding to the entire area of one side of the substrate. In the line method, by scanning the substrate in a direction intersecting the arrangement direction of the recording elements, an image can be recorded on the entire surface of the substrate, and thus a transportation system such as a carriage for scanning the short head becomes unnecessary. Since the moving of the carriage and the complicated scanning control of the substrate are unnecessary and only the substrate moves, the recording speed can be increased as compared with the shuttle method.
The ink jet recording method according to the embodiment of the present disclosure can be applied to any one of these, but generally, in a case of being applied to a line method in which a dummy jet is not performed, jetting accuracy and rub resistance of the image are greatly improved.

In view of obtaining a high definition image, an amount of jetting the ink jetted from the ink jet head is preferably

1 pl to 10 pl (picoliters) and more preferably 1.5 pl to 6 pl. From the viewpoint of improving the unevenness of the image and the connection of the continuous gradations, it is also effective to jet by combining different jetting amounts, and even in such a case, it can be suitably used for the ink jet recording method according to the embodiment of the present disclosure.

(Substrate)

The substrate used in the ink jet recording method according to the embodiment of the present disclosure is not particularly limited, and for example, so-called coated paper used for general offset printing can be used. The coated paper is paper provided with a coating layer formed such that a surface of high-quality paper, alkaline paper, or the like which uses cellulose as a main component and is generally not subjected to a surface treatment is coated with a coating material.

As the coated paper, in general, commercially available coated paper can be used. For example, coated paper for general printing can be used, and specific examples thereof include coating paper (A2 and B2) such as "OK Top Coat Plus" (surface energy: 68 mN/m) and "OK Top Coat Plus Mat" (surface energy: 54 mN/m) manufactured by Oji Paper Co., Ltd.; "Aurora Coat" (surface energy: 57 mN/m) and "Ulite" (surface energy: 54 mN/m) manufactured by NIPPON PAPER INDUSTRIES CO., LTD.; "μ Coat" (surface energy: 61 mN/m) and "μ Mat" (surface energy: 53 mN/m) manufactured by HOKUETSU KISHU PAPER CO., LTD.; and art paper (A1) such as "Tokubishi Art" manufactured by MITSUBISHI PAPER MILLS LIMITED..

The ink of the present disclosure can also be used for plastic substrates. Examples of plastic substrates include polyethylene naphthalate (PEN film Q51, manufactured by Teijin Film Solutions Limited, surface energy: 38 mN/m), nylon (RAYFAN, manufactured by TORAY ADVANCED FILM CO., LTD., surface energy: 47 mN/m), and polyethylene terephthalate (TETORON P, manufactured by Teijin Film Solutions Limited, surface energy: 44 mN/m).

In general, the following relationship (extension of Fowkes equation) is established between interfacial tension, surface energy of a substrate, and surface tension of ink.

$$\gamma_L(1 + \cos\theta) = 2(\gamma_s^d\gamma_L^d)^{1/2} + 2(\gamma_s^p\gamma_L^p)^{1/2} + 2(\gamma_s^h\gamma_L^h)^{1/2} \quad \text{... Expression 1}$$

$$\gamma_s = \gamma_s^d + \gamma_s^p + \gamma_s^h \quad \text{... Expression 2}$$

$$\gamma_L = \gamma_L^d + \gamma_L^p + \gamma_L^h \quad \text{... Expression 3}$$

$$\gamma_{sL} = \gamma_s + \gamma_L - 2(\gamma_s^d\gamma_L^d)^{1/2} - 2(\gamma_s^p\gamma_L^p)^{1/2} - 2(\gamma_s^h\gamma_L^h)^{1/2} \quad \text{... Expression 4}$$

$\gamma_s$: Surface energy of substrate
$\gamma_s^d$: Surface energy of substrate (dispersion component)
$\gamma_s^p$: Surface energy of substrate (polar component)
$\gamma_s^h$: Surface energy of substrate (hydrogen bond component)
$\gamma_L$: Surface energy of substrate
$\gamma_L^d$: Surface energy of substrate (dispersion component)
$\gamma_L^p$: Surface energy of substrate (polar component)
$\gamma_L^h$: Surface energy of substrate (hydrogen bond component)
$\gamma_{sL}$: Interfacial tension between ink and substrate
$\theta$: Contact angle

-Surface energy of substrate-

The surface energy of the substrate is obtained by measuring a contact angle of three or more kinds of standard liquid (water, diiodomethane, and hexadecane) whose surface energy is already known using a contact angle meter (DMs-401 manufactured by Kyowa Interface Science Co., Ltd.) at 20°C with respect to the substrate for which surface energy is to be calculated, and by substituting the measured value into Expression 1 to obtain a dispersion component ($\gamma_s^d$), a polar component ($\gamma_s^p$), and a hydrogen bond component ($\gamma_s^h$) of the surface energy of the substrate. Thereafter, the surface energy ($\gamma_s$) of the substrate is calculated by Expression 2.

In addition, as the values of $\gamma_L$, $\gamma_L^d$, $\gamma_L^p$, $\gamma_L^h$ of the above standard liquid (water, diiodomethane, and hexadecane), values in the literature values ("Wettability Technology Hand Book-Fundamentals Measurement Valuation Data, ed., Techno System 2001/10") are used.

In the ink jet recording method according to the embodiment of the present disclosure, the low water-absorptive substrate or the non-water-absorptive substrate can be used.

According to the present disclosure, the low water-absorptive substrate refers to a substrate having a water absorption coefficient Ka of 0.05 $mL/m^2 \cdot ms^{1/2}$ to 0.5 $mL/m^2 \cdot ms^{1/2}$, 0.1 $mL/m^2 \cdot ms^{1/2}$ to 0.4 $mL/m^2 \cdot ms^{1/2}$ is preferable, and 0.2 $mL/m^2 \cdot ms^{1/2}$ to 0.3 $mL/m^2 \cdot ms^{1/2}$ is more preferable.

In addition the non-water-absorptive substrate refers to a substrate having a water absorption coefficient Ka of less than 0.05 $mL/m^2 \cdot ms^{1/2}$.

The water absorption coefficient Ka is the same as that disclosed in the JAPAN TAPPI paper pulp test method No. 51: 2000 (issued: Pulp and Paper Technical Association), and specifically, the absorption coefficient Ka is a value calculated from the difference in the transfer amount of water at a contact time of 100 ms and a contact time of 900 ms using an automatic scanning liquid absorptometer KM500Win (manufactured by Kumagai Riki Kogyo Co., Ltd.).

An example of the surface energy ($\gamma_s$) of 68 mN/m includes "OK Top Coat Plus" manufactured by Oji Paper Co., Ltd..

In addition, an example of the substrate having a surface energy ($\gamma_s$) of 50 mN/m or higher and lower than 80 mN/m includes so-called coated paper used for general offset printing. The coated paper is paper provided with a coating layer formed such that a surface of high-quality paper, alkaline paper, or the like which uses cellulose as a main component and is generally not subjected to a surface treatment is coated with a coating material. Specific examples thereof can include coating paper such as"OK Top Coat Plus" and "OK Top Coat Plus Mat" manufactured by Oji Paper Co., Ltd., "Aurora Coat" and "Ulite" manufactured by NIPPON PAPER INDUSTRIES CO., LTD., "μ Coat" and "μ Mat" manufactured by HOKUETSU KISHU PAPER CO., LTD..

<Ink drying step>

In the ink jet recording method according to the embodiment of the present disclosure, as necessary, an ink drying step may be included. The ink drying step is not particularly limited, as long as at least a part of water and an organic solvent such as the organic solvent can be removed, and generally used methods can be applied.

<Thermal fixing step>

In the ink jet recording method according to the embodiment of the present disclosure, after the ink jetting step, the thermal fixing step may be included. By the thermal fixing step, the image on the substrate is fixed, and the rub resistance of the image can be further improved. As the thermal fixing step, for example, a thermal fixing step disclosed in paragraphs 0112 to 0120 of JP2010-221415A can be employed.

Examples

Hereinafter, the present invention will be described more specifically with reference to examples, but the present invention is not limited to the following Examples unless exceeding the gist thereof. In addition, unless specified otherwise, "part(s)" is based on mass.

<Preparation of pigment dispersion liquid>

-Synthesis of water soluble polymer dispersant-

A monomer feed composition was prepared by mixing methacrylic acid (172 parts), benzyl methacrylate (828 parts), and isopropanol (375 parts). An initiator feed composition was prepared by mixing 2,2-azobis (2-methylbutyronitrile) (22.05 parts) and isopropanol (187.5 parts).

Next, isopropanol (187.5 parts) was heated to 80°C in a nitrogen atmosphere, and a mixture of the monomer feed composition and the initiator feed composition was added dropwise thereto over two hours. After completion of the dropwise addition, the obtained solution was kept at 80°C for four hours and then cooled to 25°C.

After cooling, the solvent was removed under reduced pressure to obtain a water-soluble polymer (water soluble polymer dispersant) having a weight-average molecular weight of about 30,000 and an acid value of 112 mgKOH/g.

-Preparation of black pigment dispersion-

0.8 equivalent of the amount of methacrylic acid in the water soluble polymer dispersant 150 parts obtained as described above was neutralized with a potassium hydroxide aqueous solution and then further adjusted by adding ion exchange water to form the concentration of the water soluble polymer dispersant of 25 mass%. As a result, a water soluble polymer dispersant aqueous solution was obtained.

This water soluble polymer dispersant aqueous solution 124 parts, carbon black MA-100 (black pigment) 48 parts, water 75 parts, and dipropylene glycol 30 parts were mixed and dispersed in a beads mill (bead diameter: 0.1 mmφ, zirconia beads) until a desired volume average particle diameter was obtained to obtain a dispersion (uncrosslinked dispersion) of the polymer-coated black pigment particles having a pigment concentration of 15 parts.

To this uncrosslinked dispersion 136 parts, Denacol EX-321 (crosslinking agent manufactured by Nagase ChemteX Corporation) 1.3 parts and a boric acid aqueous solution (boric acid concentration: 4 mass%) 14.3 parts were added, reacted at 50°C for six hours and half, and then cooled to 25°C to obtain a crosslinked dispersion. Next, ion exchange water was added to the obtained crosslinked dispersion, and ultrafiltration was performed with an agitation-type ultra holder (manufactured by ADVANTEC CO., LTD.) and an ultrafiltration filter (manufactured by ADVANTEC CO., LTD., cutoff molecular weight: 50,000, Q0500076E Ultrafilter). After purification was performed such that the concentration of the dipropylene glycol in the crosslinked dispersion becomes 0.1 parts or less, concentration was performed until the concentration of the pigment became 15 parts, so as to obtain a black pigment dispersion. The pigment contained in the black pigment dispersion is a polymer coated pigment (encapsulated pigment) in which the surface thereof is coated with a crosslinked polymer in which the water soluble polymer dispersant was crosslinked with a crosslinking agent.

<Example 1>

Respective components were mixed according to the following composition, and thus the ink was prepared. After the preparation, coarse particles were removed with a 1 μm filter to prepare the ink 1.

[Composition]

Black pigment dispersion: an amount such that the concentration of the pigment became 4 parts

Organic solvent: Diethylene glycol monohexyl ether (manufactured by Wako Pure Chemical Industries, Ltd.): 3 parts
Surfactant: Capstone FS-63 (manufactured by DuPont de Nemours, Inc.): 0.001 parts
Water: an amount such that a total amount became 100 parts

<Examples 2 to 17 and Comparative Examples 1 to 13>

Ink 2 to 15 and ink 16 to 27 were prepared in the same manner as in the preparation of the ink 1, except that kinds and amounts of the organic solvent and the surfactant were changed as shown in Table 4.

<Evaluation>

(Ink jetting step)

A printer head (GELJET (registered trademark) GX5000) manufactured by Ricoh Co., Ltd. was prepared, and a storage tank connected to the printer head was filled with the prepared ink. Thereafter, the printer head was arranged and fixed so that a direction of the line head in which the nozzles are aligned is inclined by 75.7 degrees with respect to a direction orthogonal to a moving direction of a stage. While a recording sheet was moved at a constant speed in the moving direction of the stage, jetting conditions were set to an amount of the ink droplets of 2 pL, jetting frequency of 25.5 kHz, and resolution of 1200 dpi (dot per inch) × 1200 dpi. Finally, ink was jetted so as to form an image having a length of 50 mm in a grain direction (width direction) and a length of 140 mm in a direction perpendicular to the grain direction, in the line method.

(Jetting reliability)

The printer head was filled with the ink prepared in each Example or each Comparative Example to form a solid image having a recording duty of 100%. Thereafter, the printer was stopped for 30 minutes under conditions of 25°C and relative humidity of 50%, and the print head was exposed to the atmosphere. After stopping for 30 minutes, one nozzle check pattern of the ink jet recording device was formed. The recorded nozzle check pattern was visually

observed and jetting reliability of ink was evaluated according to the following evaluation standard.

As the substrate, "OK Top Coat Plus Mat" (water absorption coefficient Ka: 0.20) manufactured by Oji Paper Co., Ltd. was used in Example 11, "TETORON P (PET film)" (water absorption coefficient Ka: 0.0) was used in Example 12, and "OK Top Coat Plus" (water absorption coefficient Ka: 0.25) manufactured by Oji Paper Co., Ltd. was used in Examples and Comparative Examples except that Examples 11 and 12, respectively.

The evaluation was performed by counting the number of jetting failure nozzles (unit: piece) in which ink is not jetted. Evaluation results are shown in Table 4. In a case where the number of jetting failure nozzles is 5 or less, the number is within an allowable range for practical use.

The recording duty of 100% is defined as an image recorded under a condition of applying one drop of approximately 2.0 pL of ink to a unit area (one pixel) of 1/1200 inches × 1/1200 inches with a resolution of 1200 dpi × 1200 dpi.

[Evaluation standard]

AA: No jetting failure nozzles
A: One to two jetting failure nozzles
B: Three to five jetting failure nozzles
C: Six or more jetting failure nozzles

(Image quality)

The printer head was filled with the ink prepared in each Example or each Comparative Example, and one image having the recording duty of 80% was recorded, granularity of the image in the obtained recorded matter was visually observed, and then evaluations were performed according to the following evaluation standard. The evaluation results are shown in Table 4. The substrate is the same as the evaluation of "jetting reliability".

[Evaluation standard]

AA: No graininess is recognized at all.
A: Graininess is hardly recognized.
B: Slight graininess was recognized.
C: Noticeable graininess was recognized.

(Preservation stability)

Each ink was filled in an airtight container made of TEFLON (registered trademark) and stored for two weeks in a thermostatic chamber at 50°C to perform a storage test. The viscosity of the ink before and after the storage test was measured, and the change rate of the viscosity of the ink was calculated from the following expression. The viscosity of the ink was measured at a temperature of 30°C by using VISCOMETER TV-22 (manufactured by TOKI SANGYO CO. LTD.).

Using the measurement results, the preservation stability of ink was evaluated according to the criteria shown below. The change rate of the viscosity of ink which is closer to 1.0 means that the preservation stability of ink is higher. The evaluation results are shown in Table 4.

Viscosity change rate = (viscosity of ink after storage test)/(viscosity of ink before storage test)

[Evaluation standard]

AA: A viscosity change rate was less than 1.0.
A: A viscosity change rate was 1.0 or more and less than 1.1.

B: A viscosity change rate was 1.1 or more and less than 1.2.
C: A viscosity change rate was 1.2 or more.

The components in Table 4 are as follows.

-Surfactant-

- Partially fluorinated alcohol-substituted glycol: Capstone FS-3100 (manufactured by DuPont de Nemours, Inc.)
- Partially fluorinated phosphonic acid group-containing compound: Capstone FS-63 (manufactured by DuPont de Nemours, Inc.)
- Perfluoroalkyl compound: Surflon S-211 (manufactured by AGC SEIMI CHEMICAL CO., LTD.)
- Ammonium N, N-bis(nonafluorobutanesulfonyl)imide: F-top EF-N444 (manufactured by Mitsubishi Materials Electronics Chemical Co., Ltd.)
- Potassium N,N-hexafluoropropane-1,3-disulfonylimide: F-top EF-N302 (manufactured by Mitsubishi Materials Electronics Chemical Co., Ltd.)
- Ammonium sulfate-containing hydrocarbon: AQUALON KH-10 (manufactured by DKS Co. Ltd.)
- Modified polydimethylsiloxane: BYK-345 (manufactured by BYK Additives & Instruments)

-Organic solvent-

- DEGmHE: Diethylene glycol monohexyl ether
- EGmHE: Ethylene glycol monohexyl ether
- DEGmEHE: Diethylene glycol mono-2-ethylhexyl ether

[Table 4]

| | Ink | Organic solvent | | | | | | Suefactant | | | | | Surface tension of ink composition (mN/m) | Recording substrate (mN/m) | | Interfacial tension between substrate having surface energy of 68 mN/m and ink composition | Evaluation result | | |
|---|---|---|---|---|---|---|---|---|---|---|---|---|---|---|---|---|---|---|---|
| | | Kind | General Formula | $R^2$ | n | ClogP | Content (mass %) | Kind | Content (mass %) | Ionicity | Perfluoroalkyl group | Fluorine atom | | water absorption coefficient Ka ($mL/m^2 \cdot ms^{1/2}$) | Surface energy (mN/m) | | Jetting reliability | Image quality (granularity) | Preservation stability |
| Example 1 | Ink 1 | DEGmHE | (1) | Linear | 2 | 1.76 | 3 | Partially fluorinated phosphonic acid group-containing compound | 0.001 | Anionic | Absence | Presence | 26 | 0.25 | 68 | 53 | A | AA | A |
| Example 2 | Ink 2 | DEGmHE | (1) | Linear | 2 | 1.76 | 2 | Perfluoroalkyl compound | 0.05 | Anionic | Presence | Presence | 29 | 0.25 | 68 | 41 | AA | AA | AA |
| Example 3 | Ink 3 | EGmHE | (1) | Linear | 1 | 1.9 | 2 | Ammonium N,N-bis(nonafluorobutanesulfonyl)imide | 0.05 | Anionic | Presence | Presence | 30 | 0.25 | 68 | 47 | A | AA | A |
| Example 4 | Ink 4 | EGmHE | (1) | Linear | 1 | 1.9 | 1.2 | Ammonium N,N-bis(nonafluorobutanesulfonyl)imide | 0.005 | Anionic | Presence | Presence | 32 | 0.25 | 68 | 39 | AA | A | AA |
| Example 5 | Ink 5 | DEGmHE | (1) | Linear | 2 | 1.76 | 2 | Ammonium N,N-bis(nonafluorobutanesulfonyl)imide | 0.005 | Anionic | Presence | Presence | 33 | 0.25 | 68 | 43 | AA | AA | AA |
| Example 6 | Ink 6 | DEGmHE | (1) | Linear | 2 | 1.76 | 2 | Potassium N,N-hexafluoropropane-1,3-disulfonylimide | 0.05 | Anionic | Presence | Presence | 28 | 0.25 | 68 | 41 | A | AA | AA |
| Example 7 | Ink 7 | 1,2-Hexanediol | (2) | Linear | - | 0.53 | 3 | Potassium N,N-hexafluoropropane-1,3-disulfonylimide | 0.05 | Anionic | Presence | Presence | 30 | 0.25 | 68 | 30 | A | B | A |
| Example 8 | Ink 8 | DEGmEHE | (1) | Branched | 2 | 2.69 | 3 | Potassium N,N-hexafluoropropane-1,3-disulfonylimide | 0.05 | Anionic | Presence | Presence | 25 | 0.25 | 68 | 55 | B | A | A |
| Example 9 | Ink 9 | DEGmHE | (1) | Linear | 2 | 1.76 | 2 | Partially fluorinated alcohol-substituted glycol | 0.05 | Nonionic | Absence | Presence | 28 | 0.25 | 68 | 32 | A | B | A |
| Example 10 | Ink 10 | DEGmHE | (1) | Linear | 2 | 1.76 | 1 | Partially fluorinated phosphonic acid group-containing compound | 0.001 | Anionic | Absence | Presence | 29 | 0.25 | 68 | 48 | A | A | A |
| Example 11 | Ink 2 | DEGmHE | (1) | Linear | 2 | 1.76 | 2 | Perfluoroalkyl compound | 0.05 | Anionic | Presence | Presence | 29 | 0.20 | 54 | 41 | AA | A | AA |
| Example 12 | Ink 2 | DEGmHE | (1) | Linear | 2 | 1.76 | 2 | Perfluoroalkyl compound | 0.05 | Anionic | Presence | Presence | 29 | 0.00 | 44 | 41 | AA | A | AA |
| Example 13 | Ink 11 | 1,2-Octanediol | (2) | Linear | - | 1.58 | 2 | Perfluoroalkyl compound | 0.05 | Anionic | Presence | Presence | 30 | 0.25 | 68 | 39 | AA | A | AA |
| Example 14 | Ink 12 | 2-((2-Ethylhexyl)oxy)ethoxy)ethanol | (1) | Branched | 2 | 2.69 | 2 | Perfluoroalkyl compound | 0.05 | Anionic | Presence | Presence | 32 | 0.25 | 68 | 37 | A | A | A |
| Example 15 | Ink 13 | 1-Phenoxypropan-2-ol | (1) | Aryl group | 2 | 1.50 | 2 | Perfluoroalkyl compound | 0.05 | Anionic | Presence | Presence | 31 | 0.25 | 68 | 38 | A | A | A |
| Example 16 | Ink 14 | DEGmHE | (1) | Linear | 2 | 1.76 | 4 | Perfluoroalkyl compound | 0.05 | Anionic | Presence | Presence | 26 | 0.25 | 68 | 55 | B | A | A |
| Example 17 | Ink 15 | DEGmHE | (1) | Linear | 2 | 1.76 | 2 | Perfluoroalkyl compound | 0.08 | Anionic | Presence | Presence | 26 | 0.25 | 68 | 55 | B | A | A |
| Comparative Example 1 | Ink 16 | 1,2-Butanediol | (2) | Linear | - | -0.53 | 4 | Partially fluorinated phosphonic acid group-containing compound | 0.001 | Anionic | Absence | Presence | 34 | 0.25 | 68 | 26 | A | C | B |
| Comparative Example 2 | Ink 17 | EGmEHE | (1) | Branched | 1 | 2.83 | 1 | Partially fluorinated phosphonic acid group-containing compound | 0.001 | Anionic | Absence | Presence | 26 | 0.25 | 68 | 58 | C | A | C |
| Comparative Example 3 | Ink 18 | DEGmHE | (1) | Linear | 2 | 1.76 | 2 | Ammonium sulfate-containing hydrocarbon | 0.08 | Anionic | Absence | Absence | 34 | 0.25 | 68 | 26 | B | C | B |
| Comparative Example 4 | Ink 19 | DEGmHE | (1) | Linear | 2 | 1.76 | 2 | Modified polydimethylsiloxane | 0.05 | Nonionic | Absence | Absence | 33 | 0.25 | 68 | 26 | C | C | B |
| Comparative Example 5 | Ink 20 | EGmHE | (1) | Linear | 1 | 1.9 | 6 | Partially fluorinated phosphonic acid group-containing compound | 0.001 | Anionic | Absence | Presence | 25 | 0.25 | 68 | 59 | C | B | C |
| Comparative Example 6 | Ink 21 | EGmHE | (1) | Linear | 1 | 1.9 | 0.5 | Partially fluorinated phosphonic acid group-containing compound | 0.001 | Anionic | Absence | Presence | 34 | 0.25 | 68 | 25 | A | C | A |
| Comparative Example 7 | Ink 22 | DEGmHE | (1) | Linear | 2 | 1.76 | 1 | - | 0 | - | - | - | 34 | 0.25 | 68 | 25 | B | C | A |
| Comparative Example 8 | Ink 23 | DEGmHE | (1) | Linear | 2 | 1.76 | 1 | Partially fluorinated phosphonic acid group-containing compound | 0.2 | Anionic | Absence | Presence | 25 | 0.25 | 68 | 58 | C | B | A |
| Comparative Example 9 | Ink 24 | DEGmHE | (1) | Linear | 2 | 1.76 | 4 | Partially fluorinated phosphonic acid group-containing compound | 0.08 | Anionic | Absence | Presence | 23 | 0.25 | 68 | 59 | C | A | B |
| Comparative Example 10 | Ink 10 | DEGmHE | (1) | Linear | 2 | 1.76 | 1 | Partially fluorinated phosphonic acid group-containing compound | 0.0001 | Anionic | Absence | Presence | 39 | 0.25 | 68 | 25 | A | C | B |
| Comparative Example 11 | Ink 25 | 1,2-Octanediol | (2) | Linear | - | 1.58 | 1 | Perfluoroalkyl compound | 0.001 | Anionic | Presence | Presence | 34 | 0.25 | 68 | 21 | A | C | B |
| Comparative Example 12 | Ink 26 | DEGmEHE | (1) | Branched | 2 | 2.69 | 4 | Perfluoroalkyl compound | 0.08 | Anionic | Presence | Presence | 25 | 0.25 | 68 | 63 | C | B | C |
| Comparative | Ink 27 | 3,6,9,12- | - | - | 4 | 1.37 | 2 | Perfluoroalkyl compound | 0.05 | Anionic | Presence | Presence | 28 | 0.25 | 68 | 27 | B | C | C |

| | | | | | | | | | | | | | | | | | | | |
|---|---|---|---|---|---|---|---|---|---|---|---|---|---|---|---|---|---|---|---|
| Example 13 | | Tetraoxaoctadecanol | | | | | | | | | | | | | | | | | |

As shown in Table 4, in Examples, the jetting reliability and the image quality (granularity) were good, and the preservation stability was also excellent. In Examples, Examples 2 to 6 and Examples 11 to 15 containing a compound having a perfluoroalkyl group as a surfactant were particularly excellent in the jetting reliability and the image quality (granularity).

On the other hand, in Comparative Examples 1 to 13, at least either the jetting reliability or the image quality (granularity) is deteriorated, and it is difficult to achieve both excellent image quality and jetting reliability.

The disclosure of JP2017-189172 filed on September 28, 2017 is incorporated herein by reference in its entirety.

All of the documents, the patent applications, and the technical standards described in the present specification are incorporated into the present specification by reference, as if each of the documents, the patent applications, and the technical standards is specifically and independently described by reference.

The ink jet recording ink composition of the present disclosure can be suitably used for a low water-absorptive substrate or a non-water-absorptive substrate such as coated paper and plastic substrates, and particularly can be used in a case of performing ink jet recording by a roll-to-roll ink jet method.

## Claims

**1.** An ink jet recording ink composition comprising:

a coloring material;
water;
an organic solvent represented by the following General Formula (1) or the following General Formula (2) and having a ClogP value of 0.5 to 2.7; and
a surfactant having a fluorine atom in a molecule,
wherein a content of the organic solvent is 1.0 mass% or more and less than 5.0 mass % with respect to a total mass of a composition,
a content of the surfactant is 0.001 mass% or more and less than 0.1 mass% with respect to the total mass of a composition,
surface tension is 25 mN/m or higher and lower than 35 mN/m, and
interfacial tension with a substrate in a case of coming into contact with the substrate having surface energy of 68 mN/m is 25 mN/m or higher and lower than 60 mN/m,

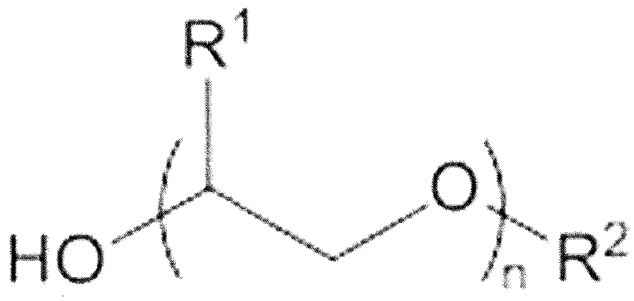

General Formula (1)

in General Formula (1), $R^1$'s each independently represent a hydrogen atom or a methyl group, $R^2$ represents a linear or branched hydrocarbon group having 4 to 9 carbon atoms or an aryl group having 6 to 10 carbon atoms, and n represents an integer of 1 to 3,

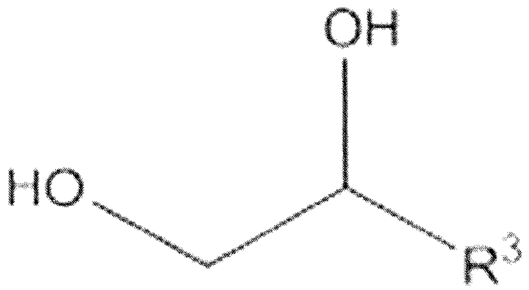

General Formula (2)

in General Formula (2), $R^3$ represents a linear or branched hydrocarbon group having 4 to 9 carbon atoms or an aryl group having 6 to 10 carbon atoms.

2. The ink jet recording ink composition according to claim 1, wherein the interfacial tension is 40 mN/m or higher and lower than 60 mN/m.

3. The ink jet recording ink composition according to claim 1 or 2, wherein the organic solvent is a compound represented by General Formula (1).

4. The ink jet recording ink composition according to any one of claims 1 to 3, wherein in General Formula (1), $R^2$ is a linear hydrocarbon group having 4 to 9 carbon atoms.

5. The ink jet recording ink composition according to any one of claims 1 to 4, wherein the ClogP value of the organic solvent is 1.5 to 2.0.

6. The ink jet recording ink composition according to any one of claims 1 to 5, wherein the organic solvent is diethylene glycol monohexyl ether or ethylene glycol monohexyl ether.

7. The ink jet recording ink composition according to any one of claims 1 to 6, wherein the surfactant has a perfluoroalkyl group in the molecule.

8. The ink jet recording ink composition according to any one of claims 1 to 7, wherein the surfactant is an anionic surfactant.

9. The ink jet recording ink composition according to any one of claims 1 to 8, wherein the surface tension is 28 mN/m to 33 mN/m.

10. An ink jet recording method of recording an image by jetting the ink jet recording ink composition according to any one of claims 1 to 9 on a substrate.

11. The ink jet recording method according to claim 10, wherein the substrate is a low water-absorptive or non-water-absorptive substrate.

## INTERNATIONAL SEARCH REPORT

International application No.
PCT/JP2018/032266

A. CLASSIFICATION OF SUBJECT MATTER
Int. Cl. C09D11/38(2014.01)i, B41J2/01(2006.01)i, B41M5/00(2006.01)i

According to International Patent Classification (IPC) or to both national classification and IPC

B. FIELDS SEARCHED

Minimum documentation searched (classification system followed by classification symbols)
Int. Cl. C09D11/00-13/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| Y | WO 2012/070243 A1 (KONICA MINOLTA IJ TECHNOLOGIES, INC.) 31 May 2012, paragraph [0063], examples, claims (Family: none) | 1-11 |
| Y | JP 2014-118553 A (TOYO INK SC HOLDINGS CO., LTD.) 30 June 2014, claims, paragraphs [0061], [0069], examples (Family: none) | 1-11 |
| Y | JP 2009-226764 A (KONICA MINOLTA IJ TECHNOLOGIES, INC.) 08 October 2009, claims, paragraph [0018] (Family: none) | 8 |
| Y | JP 2017-043729 A (SCREEN HOLDINGS CO., LTD.) 02 March 2017, paragraph [0056] (Family: none) | 1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17.10.2018 | 30.10.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/032266

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2017-039915 A (RICOH CO., LTD.) 23 February 2017, paragraph [0011] & US 2017/0051170 A1, paragraph [0042] | 1-11 |
| Y | JP 2011-209655 A (FUJIFILM CORP.) 20 October 2011, paragraph [0179] (Family: none) | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2016010931 A
- JP 2016204524 A
- JP 2017109485 A
- JP 5017510 A
- JP H05017510 A
- JP 2011178029 A
- JP 2003306623 A
- JP 54059936 A
- JP 2010221415 A
- JP 2017189172 A

### Non-patent literature cited in the description

- **J. BRANDRUP ; E. H. IMMERGUT.** Polymer Handbook. Wiley-Interscience, 1989
- Techno System 2001/10. Wettability Technology Hand Book-Fundamentals Measurement Valuation Data